# EUROPÄISCHE PATENTSCHRIFT

(11) **EP 2 808 159 B1**
(45) Veröffentlichungstag und Bekanntmachung des Hinweises auf die Patenterteilung: **02.11.2016**
(21) Anmeldenummer: 14164403.9
(22) Anmeldetag: 11.04.2014
(51) Int. Cl.: B29D 30/46, B65H 29/46

(54) **Hochhalter für eine Cordschneidanlage**
Retainer for a cord cutting system
Support haut pour une installation de coupe de corde

(30) Priorität: 29.05.2013 DE 202013102346 U
(43) Veröffentlichungstag der Anmeldung: 03.12.2014
(73) Patentinhaber: Karl Eugen Fischer GmbH, 96224 Burgkunstadt (DE)
(72) Erfinder: Hoffmann, Bernd, 96224 Burgkunstadt (DE); Flieger, Walter, 95326 Kulmbach (DE); Schulz, Udo, 95448 Bayreuth (DE)
(74) Vertreter: Patentanwälte Olbricht Buchhold Keulertz

(56) Entgegenhaltungen:
- EP-A1- 1 745 920
- WO-A1-2011/162600
- CN-U- 201 520 914
- DE-A1-102007 001 151
- US-A- 1 428 420
- US-A- 1 479 346
- US-A1- 2012 067 516

## Beschreibung

Die Erfindung betrifft einen Hochhalter für eine Cordschneidanlage mit einem Gestell und einem Rahmen, der gegenüber dem Gestell vertikal zwischen einer oberen Abholposition und einer unteren Abgabeposition bewegbar ist, wobei am Rahmen mehrere Hochhalterelemente nebeneinander angeordnet sind, zwischen denen Freiräume für Transportbänder ausgebildet sind, wobei am Gestell mindestens eine Welle drehbeweglich gelagert ist, die an ihren Enden jeweils eine Kurbel aufweist, die am Rahmen drehbeweglich in einer Linearführung zum Ausgleich eines Drehversatzes gelagert ist.

Derartige Hochhalter werden bei Cordschneidanlagen üblicherweise dazu verwendet, einen Höhenversatz zwischen einer Schere und darauffolgenden Anlagenkomponenten, wie beispielsweise einer Spleißeinrichtung, auszugleichen und einen in der Schere abgeschnittenen Materialbahnstreifen zur Spleißeinrichtung zu transportieren. In Verbindung mit einer als Überlappspleißer ausgebildeten Spleißeinrichtung werden beispielsweise in der Schere geschnittene Streifen anschließend mit Hilfe des Hochhalters an einer Kante überlappend mit dem vorher geschnittenen Materialbahnstreifen abgelegt, um anschließend im überlappenden Bereich miteinander mittels Spleißen verbunden zu werden.

In Cordschneidanlagen erfolgt eine Verarbeitung von klebrigen und in der Regel dünnem Cordmaterial, das beispielsweise mit Textil- oder Stahldrähten verstärkt ist. Dieses Cordmaterial kann unter anderem zur Herstellung von Autoreifen verwendet werden. Dabei wird das Cordmaterial von einer Rolle abgezogen und mithilfe einer Schere in Streifen geschnitten, wobei die geschnittenen Streifen anschließend mit ihren an die Schneidkante angrenzenden Seiten mittels Spleißens, also unter Druck ohne zusätzliche Verbindungsmittel, wieder miteinander verbunden werden. Die geschnittenen Streifen werden dadurch wieder bandförmig miteinander verbunden, wobei eine Breite des neuen Bandmaterials durch die Breite der mit Hilfe der Schere abgeschnittenen Streifen individuell vorgegeben werden kann.

Das Schneiden der Streifen erfolgt dabei mit einer relativ hohen Geschwindigkeit. Dementsprechend muss auch der Hochhalter mit einer relativ hohen Frequenz zwischen der Abholposition und der Abgabeposition auf und ab bewegt werden, wobei gleichzeitig eine relativ genaue Positionierung in den jeweiligen Abholpositionen erforderlich ist, um die Streifen genau ablegen zu können. Dabei müssen verhältnismäßig hohe Massen gleichzeitig bewegt werden, sodass die Anforderungen an den Hochhalter entsprechend groß sind.

Es ist bekannt, den Rahmen des Hochhalters über insgesamt vier Kurbeln, die jeweils paarweise Enden einer Welle zugeordnet sind sind, am Gestell zu lagern, wobei beide parallel zueinander ausgerichtete Wellen synchron mittels eines Zugmittelsgetriebes von einem Antrieb in Rotation versetzt werden können. Die Wellen sind dabei am Gestell drehbeweglich gelagert.

Mit einem derartigen Hochhalter ist es aufgrund der beiden synchron angetriebenen Wellen zwar möglich, die gewünschten kurzen Zykluszeiten zu erreichen, diese Hochhalter weisen aber einen relativ hohen Wartungsaufwand auf. So ist in zeitlichen Abständen immer wieder ein Nachspannen und gegebenenfalls ein Austausch des Zahnriemens erforderlich, was mit einem hohen Arbeitsaufwand verbunden ist. Ferner besteht das Risiko, dass der Zahnriemen reißt oder überspringt, falls die vorgegebenen Wartungsintervalle nicht eingehalten werden. Verschleißbedingt kann es so zu relativ großen mechanischen Schäden kommen.

Ein Beispiel für einen Hochhalter für eine Vorrichtung zum Schneiden und Verspleissen von Bandabschnitten eines klebrigen Bandes ist in EP 1 745 920 1 offenbart.

Der Erfindung liegt daher die Aufgabe zugrunde, die Nachteile des Stands der Technik zu beseitigen und insbesondere einen Hochhalter anzugeben, der mit geringem Wartungsaufwand auskommt und verschleißarm ist. Ferner soll der Hochhalter mit möglichst geringem Aufwand und kostengünstig hergestellt werden können sowie eine genaue Ansteuerung der oberen Abholposition und der unteren Abgabeposition ermöglichen. Erfindungsgemäß wird diese Aufgabe dadurch gelöst, dass die Welle über mindestens ein Getriebe, das als Reibrad- oder Zahnradgetriebe ausgebildet ist, mit dem Antrieb antreibbar verbunden ist.

Die Welle, die zur Erzeugung der Drehbewegung der Kurbeln dient und die dafür drehfest mit diesen verbunden ist, ist mit dem Antrieb über ein Reibrad- oder Zahnradgetriebe antreibbar. Der bisher übliche, wartungsanfällige Zahnriemen kann dadurch vollständig entfallen. Dabei sind Reibrad- oder Zahnradgetriebe verschleißarm und können relativ hohe Kräfte beziehungsweise Momente übertragen. Zusätzlich weisen derartige Getriebe relativ geringes Spiel auf, sodass ein genaues Ansteuern der gewünschten Positionen möglich ist. Dadurch kann der Rahmen mit den Hochhalterelementen sehr genau positioniert werden. Die Kurbeln können dabei entweder umlaufend angetrieben werden oder nur über einen bestimmten Winkelbereich von beispielsweise 180° bewegt werden. Im zweiten Fall erfolgt jeweils in der Abgabeposition und in der Abholposition eine Umkehr der Drehrichtung.

In einer bevorzugten Weiterbildung ist senkrecht zur Welle mindestens eine horizontal verlaufende Torsionswelle angeordnet, die an ihren Enden jeweils eine Kurbel aufweist, die am Rahmen drehbeweglich in einer Linearführung zum Ausgleich eines Drehversatzes gelagert ist. Die Welle selbst verläuft dabei in der Regel ebenfalls horizontal, sodass die Welle und die Torsionswelle unterhalb des Rahmens noch relativ wenig Bauraum benötigen. Die Kurbeln sind dabei an der Torsionswelle ebenfalls drehfest angeordnet, beispielsweise über eine Ring-Spannverbindung. Diese Torsionswelle dient dabei mit ihren Kurbeln zur Aufnahme von Torsionskräften, die im Falle von außermittigen Belastungen auf den Rahmen mit den Hochhalterelementen wirken.

Dabei ist besonders bevorzugt, dass mindestens zwei horizontal verlaufende Torsionswellen senkrecht zur Welle angeordnet sind. Die beiden Torsionswellen sind dabei bevorzugterweise in einem mit dem gleichen Abstand zu einem Massenschwerpunkt des Hochhalters angeordnet, der beispielsweise im Zentrum des Rahmens liegt. Mithilfe der beiden Torsionswellen ist ein Verkippen des Rahmens mit den Hochhalterelementen sicher zu verhindern, ohne dass zusätzliche vertikale Linearführungen zwischen Rahmen und Gestell erforderlich sind. Bei einer außermittigen, von oben auf den Rahmen wirkenden Kraftbelastung wird ein Verkippen des Rahmens verhindert, da diesem durch die Kurbeln der Torsionswellen entgegengewirkt wird. Die Torsionswellen sind dabei im Gestell frei drehbar gelagert und übertragen die auf den Rahmen wirkenden Gewichtskräfte auf das Gestell.

Vorzugsweise ist die Welle zentrisch zum Rahmen angeordnet. Mittigwirkende Kräfte auf den Rahmen können dann direkt über die Kurbeln in die Welle und damit in das Gestell abgeleitet werden. Außermittige Kräfte werden mithilfe der senkrecht zu der Welle verlaufenden Torsionswellen beziehungsweise deren Kurbeln aufgenommen. Auch bei größeren Kräften ist damit immer eine stabile Lage des Rahmens beziehungsweise der Hochhalterelemente gewährleistet. Insbesondere ein Verkippen ist nicht zu befürchten.

Bevorzugterweise ist ein Drehwinkel der Torsionswellen auf weniger als 180° begrenzt, wobei eine Drehbewegung der Torsionswellen unterschiedlich ist. Die Kurbeln der Drehwellen laufen also nicht um, sondern können sich nur über einen gewissen Winkelbereich bewegen. Durch die gegensinnige Bewegung wird dabei erreicht, dass kein Versatz des Rahmens in Horizontalrichtung erfolgt und dass die Angriffspunkte der Kurbeln am Rahmen symmetrisch zur Mitte der Linie verbleiben. Aufgrund des Drehwinkels von weniger als 180° kann darüber hinaus gewährleistet werden, dass nie eine der Kurbeln senkrecht steht, was eine Bewegung des Rahmens blockieren könnte.

In einer bevorzugten Ausgestaltung weisen die Kurbeln der Torsionswellen eine größere Länge auf, als die Kurbeln der Welle. In der oberen Abholposition beziehungsweise der unteren Abgabeposition stehen dann die Kurbeln der Welle senkrecht, während die Kurbeln der Torsionswellen aufgrund deren größeren Länge noch eine geneigte Position einnehmen. Durch eine derartige Ausgestaltung wird eine Begrenzung des Drehwinkels der Torsionswellen beziehungsweise deren Kurbeln relativ einfach erreicht.

Bevorzugterweise laufen die Torsionswellen leer. Die Torsionswellen sind also nicht mit einem Antrieb verbunden, sondern momentenfrei am Gestell gelagert. Sie dienen nur dazu, Kräfte aufzunehmen, die zu einer Verkippung des Rahmens beziehungsweise der Hochhalterelemente führen würden. Antriebskräfte werden vom Antrieb nicht auf die Torsionswelle und die dazugehörigen Kurbeln übertragen. Die Torsionswellen weisen vielmehr keine Verbindung zum Antrieb auf. Eine Überbestimmung des Systems wird damit vermieden und der Gesamtaufwand zur Herstellung des Hochhalters relativ klein gehalten, da keine zusätzlichen Getriebe und/oder Antriebe benötigt werden. Gleichzeitig wird ein Steuerungsaufwand kleingehalten.

In einer alternativen Ausführungsform weist der Hochhalter mindestens zwei parallel zueinander laufende Wellen auf, die am Gestell drehbeweglich gelagert sind und an ihren Enden jeweils über eine Kurbel mit dem Rahmen verbunden sind, wobei die Wellen senkrecht zu einer Antriebswelle des Antriebs angeordnet sind und jeweils über ein als Kegelradgetriebe ausgebildetes Getriebe über die gemeinsame Antriebswelle antreibbar sind. Die beiden parallel zueinander laufenden Wellen sind dann insbesondere symmetrisch zu einer Mittelachse des Rahmens angeordnet, also mit gleichem Abstand zu den Seitenkanten des Rahmens. Die vom Motor bereitgestellte Antriebskraft wird dann von der Antriebswelle auf beide parallel laufende Wellen verteilt und auf die Kurbeln übertragen, die fest an den Enden der Wellen angeordnet sind. Mithilfe der Kegelradgetriebe lässt sich dabei auch eine gegenläufige Bewegung der Wellen erreichen, sodass die Angriffspunkte der Kurbeln am Rahmen symmetrisch zu dessen Mittelachse bleiben. Ein Kegelradgetriebe erlaubt dabei zum einen eine Winkeländerung und zum anderen die Übertragung hoher Drehmomente, wobei ein derartiges Getriebe wartungsarm arbeitet.

Bevorzugterweise sind die Wellen jeweils durch eine durchgehende Abtriebsbohrung der Kegelradgetriebe geführt. Die Wellen verlaufen also durch das jeweilige Kegelradgetriebe hindurch und können so stabil gefertigt werden.

Der Rahmen kann am Gestell in mindestens einer vertikalen Linearführung geführt sein. Die Linearführung kann beispielsweise eine Führungsschiene aufweisen, die am Gestell befestigt ist, und einen Führungswagen, der am Rahmen angeordnet ist und in der Führungsschiene vertikal geführt ist. Diese Linearführung unterstützt dabei eine Führung des Rahmens während der Auf- beziehungsweise Abbewegung und verhindert damit ein Verkippen des Rahmens beziehungsweise der Hochhalterelemente.

Bevorzugterweise weisen die Hochhalterelemente eine Vakuumansaugung auf, wobei insbesondere die Hochhalterelemente einzeln ansteuerbar sind. Die mithilfe einer Zugvorrichtung auf den in seiner Abholposition befindlichen Hochhalter abgelegten Streifen können mithilfe der Vakuumansaugung an die Oberflächen der Hochhalterelemente angesaugt werden. Damit wird ein sicherer Halt der Streifen auch während der Bewegung der Hochhalterelemente gewährleistet. Wenn eine einzelne Ansteuerung der Hochhalterelemente möglich ist, also nicht immer alle Hochhalterelemente mit Vakuum versorgt werden müssen, kann die Anzahl der Hochhalterelemente, bei denen die Vakuumansaugung aktiviert ist, an die Breite der Materialbahnstreifen angepasst werden. Verluste werden so gering gehalten und in den aktiven Hochhalterelementen ein starkes Vakuum angelegt. Wenn die Hochhalterelemente mit den abgeschnittenen Materialstreifen nach unten zur Abgabeposition bewegt werden, bleibt die Vakuumansaugung aktiv, da dabei eine die Erdbeschleunigung übersteigende Beschleunigung erreichbar ist. Ein Verrutschen der abgeschnittenen Streifen wird also zuverlässig verhindert.

Vorzugsweise weisen die Transportbänder eine Vakuumansaugung auf. Die Transportbänder sind beispielsweise am Gestell des Hochhalters gelagert und dienen dazu, die abgeschnittenen Materialstreifen von den Hochhalterelementen wegzubewegen, wenn sich diese in der Abgabeposition befinden. Mithilfe einer Vakuumansaugung kann dabei gewährleistet werden, dass die abgeschnittenen Materialstreifen von allen Transportbändern mitbewegt werden, ohne dass es zu einem Durchrutschen einzelner Transportbänder kommt. Auch dies fördert die Genauigkeit, mit der die abgeschnittenen Streifen abgelegt werden können.

Vorzugsweise ist am Rahmen ein vertikal bewegbarer Gegenhalter angeordnet, der sich parallel zu den Hochhalterelementen erstreckt. Der Gegenhalter befindet sich dabei außen neben den Hochhalterelementen und kann fluchtend unterhalb eines Messers einer Schere angeordnet werden. Der Gegenhalter dient dann dazu, das Material beim Schneiden in Zusammenarbeit mit dem Messer einzuklemmen und so ein Verrutschen zu verhindern. Durch die vertikale Bewegbarkeit kann der Gegenhalter dann nach unten ausweichen, wenn das Obermesser beim Schneidvorgang eintaucht. Der eigentliche Schneidvorgang wird so durch den Gegenhalter nicht behindert.

In einer bevorzugten Weiterbildung weist der Gegenhalter eine Mehrzahl an nebeneinander angeordneten Gegenhalterelementen auf, die vertikal relativ zueinander bewegbar sind, wobei die Gegenhalterelemente insbesondere durch jeweils ein Federelement in Richtung einer vertikal oberen Position belastet sind. In der Regel verläuft eine Schneidkante nicht parallel zur Oberfläche des Materials beziehungsweise parallel zur Kante eines unteren Messers, sondern in einem Winkel, sodass der Schnitt an einem Seitenrand der Materialbahn beginnt und dann bis zum gegenüberliegenden Rand fortgesetzt wird. Durch das Vorsehen einer Mehrzahl von nebeneinander angeordneten Gegenhalterelementen wird diesem Umstand Rechnung getragen, wobei die einzelnen Gegenhalterelemente mit Fortschreiten des Schnitts nacheinander vertikal nach unten gedrückt werden.

In einer bevorzugten Weiterbildung werden nach erfolgtem Schnittvorgang die Gegenhalterelemente automatisch mit Hilfe des Federelementes nach oben bewegt und nehmen wieder ihre Grundstellung ein. Durch das Federelement ist darüber hinaus die Kraft einstellbar, die erforderlich ist, um die Gegenhalterelemente vertikal nach unten zu drücken. Damit wird die Klemmkraft an der Schneidkante vorgegeben. Mithilfe des Gegenhalters kann das zugeführte Material direkt nach der Schere unterstützt werden, wobei die Gegenhalterelemente den Materialstreifen bei Schnittbeginn und bis zur Beendigung des Schnittes zusammen mit dem Messer das Material einklemmen und in Position halten. Vor der Messeröffnung kann zusätzlich eine Niederhaltervorrichtung vorgesehen sein, die die zugeführte Materialbahn in Position hält.

Bevorzugterweise sind Oberseiten der Gegenhalterelemente geneigt zueinander ausgebildet, wobei der Gegenhalter insbesondere ein Sägezahnprofil aufweist. Damit kann auch dann ein sicheres Klemmen erfolgen, wenn die Schneidkante nicht parallel zur Oberfläche des Materials verläuft, sondern in einem Schneidwinkel dazu.

Ein sicherer Halt des Materials kann zusätzlich noch dadurch erreicht werden, das zumindest einige der Gegenhalterelemente, insbesondere die beiden äußeren Gegenhalterelemente auf der Spleißerseite, eine Vakuumansaugung aufweisen, wobei insbesondere eine Führung der Federelemente als Vakuumeinspeisung ausgebildet ist. Damit erfolgt ein sicherer Halt des Materials an den Gegenhalterelementen bereits vor Beginn des eigentlichen Schneidevorgangs. Wenn dann nur einige der Gegenhalterelemente, insbesondere nur die beiden äußeren Gegenhalterelemente mit der Vakuumansaugung versehen sind, werden der Aufwand und die Betriebskosten gering gehalten.

Vorzugsweise weist die Oberseite der Gegenhalterelemente eine Antihaftbeschichtung auf. Damit wird sichergestellt, dass sich der abgeschnittene Materialstreifen relativ einfach wieder von der Oberseite der Gegenhalterelemente lösen lässt, wenn dieser in der Abgabeposition des Hochhalters von den Transportbändern übernommen und abtransportiert werden soll.

In einer bevorzugten Ausführungsform kann das Gestell in einer Horizontalrichtung linear verschiebbar auf einem Grundrahmen angeordnet sein, wobei zum Erzeugen einer Verstellbewegung insbesondere ein Spindeltrieb vorgesehen ist. Die Verstellung erfolgt dabei insbesondere parallel zur Förderrichtung der Transportbänder. Dadurch ist eine einfache Anpassung an unterschiedliche Kalanderbreiten möglich.

Der Spindeltrieb weist beispielsweise einen Antrieb mit einer Kupplung und einer Gewindespindel auf, wobei die Drehbewegung des Antriebs auf eine Gewindemutter übertragen wird, die linear bewegt wird. Die Gewindemutter ist dafür am Gestell mit dem Rahmen beispielsweise über eine Platte drehfest befestigt. Durch die Betätigung des Antriebs wird dann das Gestell mit dem Rahmen linear verschoben. Mit Hilfe von Anschlägen können dabei gewünschte Positionen vordefiniert werden bzw. ein Überfahren dieser Positionen verhindert werden.

Durch diese Verstellbarkeit linear zur Abtransportrichtung können auch Schwankungen der Breite der abgeschnittenen Materialstreifen ausgeglichen werden. Dafür kann beispielsweise mithilfe einer Kamera eine Kante des kommenden Materialstreifens überwacht werden und während der Rückzugsbewegung eine Ausrichtung vorgenommen werden, um den Streifen beispielsweise mit der gewünschten Überlappung auf den vorhergehenden Streifen ablegen zu können.

Vorzugsweise ist der Hochhalter mit einer Schere kombiniert, wobei die Hochhalterelemente und gegebenenfalls der Gegenhalter parallel zueinander zur Öffnung der Schere verlaufen. Dadurch kann der Hochhalter direkt angrenzend an die Messeröffnung beziehungsweise den Schneidspalt angeordnet werden. Ein Zwischentransport der abgeschnittenen Streifen ist nicht erforderlich, sodass geringere Zykluszeiten erreichbar sind. Ferner ist dadurch eine enge Schnittstelle zur Übergabe des Materials im Anschluss an die Schere geschaffen. Insbesondere durch die Verwendung eines Gegenhalters kann das Material dabei nahezu durchgängig gestützt werden.

Dabei ist besonders bevorzugt, dass der Gegenhalter fluchtend unterhalb einer Schneidkante eines Obermessers der Schere angeordnet ist und beim Schneidvorgang durch das Obermesser nach unten drückbar ist. Die Schere ist dabei beispielsweise in Art einer Guillotine aufgebaut, bei der das Obermesser vertikal von oben nach unten bewegbar ist und dadurch in Zusammenwirkung mit dem feststehenden Untermesser den Schnitt durchführt. Mithilfe des Gegenhalters kann dann der abgeschnittene Streifen während des Schneidvorgangs geklemmt werden, sodass ein Verziehen oder Verdrehen der Streifen nicht zu befürchten ist. Somit kann eine definierte Ablageposition, die für die gewünschte Genauigkeit zum Spleißen erforderlich ist, gewährleistet werden.

In einer bevorzugten Weiterbildung weist der Hochhalter eine Winkelverstellung auf, wobei die Hochhalterelemente und gegebenenfalls der Gegenhalter in deren Längsrichtung linear verschiebbar am Rahmen gelagert sind und bei einer Betätigung der Winkelverstellung winkeltreu in der Längsrichtung relativ zueinander bewegbar sind, wobei eine Breite der Freiräume konstant bleibt. Damit kann auch in den Fällen, in denen die Materialbahn in einem Winkel der Schere und damit dem Hochhalter zugeführt wird, der abgeschnittene Streifen vollständig von den Hochhalterelementen unterstützt werden. Die Bewegung der Transportbänder wird dabei nicht behindert und auch die Abtransportrichtung nicht beeinflusst, da die Winkellage der Hochhalterelemente konstant bleibt und auch ein Abstand zwischen den Hochhalterelementen, also die Breite der Freiräume, unverändert bleibt.

Dies kann beispielsweise dadurch erreicht werden, dass die Hochhalter über eine Mitnehmerplatte miteinander verbunden sind, wobei die Mitnehmerplatte um einen Drehpunkt verschwenkbar am Rahmen gelagert ist. Die Hochhalterelemente greifen dafür beispielsweise mit Führungszapfen in entsprechende Öffnungen in der Mitnehmerplatte ein, sodass bei einer Verschwenkung der Mitnehmerplatte die Hochhalterelemente in deren Längsrichtung verschoben werden. Der Antrieb der Mitnehmerplatte kann dabei beispielsweise eigenständig sein, oder durch eine mechanische Kopplung mit einem vor- oder nachgeschalteten Anlagenelement erfolgen. Gegebenenfalls können einzelne Hochhalterelemente gegensinnig zueinander verschoben werden beispielsweise die auf einer Seite des Hochhalters in Abtransportrichtung und die näher an einer gegenüberliegenden Seite angeordneten Hochhalterelemente entgegengesetzt zur Abtransportrichtung.

Ein nachfolgendes Anlagenelement ist beispielsweise eine Spleißeinrichtung, wobei bevorzugterweise der Hochhalter mit einer Spleißeinrichtung kombiniert ist. Die Spleißeinrichtung ist dabei insbesondere als Überlappspleißer ausgebildet. Dabei ist es möglich, die abgeschnittenen Streifen mit dem Hochhalter bereits so zu positionieren, dass sie direkt mithilfe der Spleißeinrichtung miteinander wieder verbunden werden können. Transportwege werden so gering gehalten. Durch die direkte Kombination von Hochhalter und Spleißeinrichtung ist dabei eine hohe Ablagegenauigkeit bei kurzen Zykluszeiten erreichbar.

Eine besonders kompakte Vorrichtung, die eine hohe Genauigkeit bei einem hohen Ausstoß gewährleistet, wird dadurch erreicht, dass die Spleißeinrichtung am Gestell des Hochhalters befestigt ist, wobei der Hochhalter mit der Spleißeinrichtung und den in den Zwischenräumen angeordneten Transportbändern eine Einheit bildet. In diese Einheit kann dabei gegebenenfalls auch die Schere mit integriert werden.

Damit ist es möglich, dass die Materialstreifen durch den Hochhalter derart überlappend aufeinander ablegbar sind, dass ein Spleiß mit der Spleißeinrichtung direkt ohne eine Zwischenförderung möglich ist. Damit wird eine hohe Genauigkeit bei kurzen Zykluszeiten erreicht.

Bevorzugterweise ist ein Spleißwinkel der Spleißeinrichtung einstellbar, wobei insbesondere durch eine Verstellung des Spleißwinkels eine Winkelverstellung des Hochhalters bewirkbar ist. Damit können auch Streifen miteinander verbunden werden, die mit einem Winkel der Schere zugeführt und entsprechend schräg geschnitten wurden. Dabei kann die Spleißwinkelverstellung der Spleißeinrichtung mit der Winkelverstellung des Hochhalters mechanisch gekoppelt werden, sodass beide immer den gleichen Winkel einnehmen und nur ein gemeinsamer Antrieb benötigt wird.

Die Erfindung wird im Folgenden anhand eines bevorzugten Ausführungsbeispiels in Verbindung mit den Zeichnungen näher beschrieben. Es zeigen:
- Fig. 1: eine Prinzipdarstellung eines Hochhalters mit benachbarten Anlagenkomponenten,
- Fig. 2: die Prinzipdarstellung in Seitenansicht,
- Fig. 3a: eine vereinfachte Vorderansicht mit dem Hochhalter in Abgabeposition,
- Fig. 3b: eine Seitenansicht mit dem Hochhalter in Abgabeposition,
- Fig. 4a: eine vereinfachte Vorderansicht mit dem Hochhalter in Abholposition,
- Fig. 4b: eine Seitenansicht mit den Hochhalterelementen in Abholposition,
- Fig. 5a: eine Stellung der Kurbel der Welle in Abgabeposition,
- Fig. 5b: eine Stellung der Kurbeln der Torsionswellen in Abgabeposition,
- Fig. 6a: eine Stellung der Kurbel der Welle zwischen Abgabeposition und Abholposition,
- Fig. 6b: eine Stellung der Kurbeln der Torsionswellen zwischen einer Abgabeposition und der Abholposition,
- Fig. 7a: eine Stellung der Kurbel der Welle in Abholposition,
- Fig. 7b: eine Stellung der Kurbeln der Torsionswellen in Abholposition,
- Fig. 8: eine Draufsicht auf einen Rahmen des Hochhalters,
- Fig. 9: eine Anordnung der Hochhalterelemente bei geradem Materialverlauf,
- Fig. 10: eine Anordnung der Hochhalterelemente bei winkeligem Materialverlauf,
- Fig. 11: einen Gegenhalter,
- Fig. 12: eine weitere Ausführungsform des Hochhalters in Seitenansicht,
- Fig. 13: eine Draufsicht auf den Hochhalter gemäß Figur 12,
- Fig. 14: eine Prinzipdarstellung eines typischen Layouts einer Cordschneidanlage,

- Fig. 15: ein erweitertes Anlagenlayout.

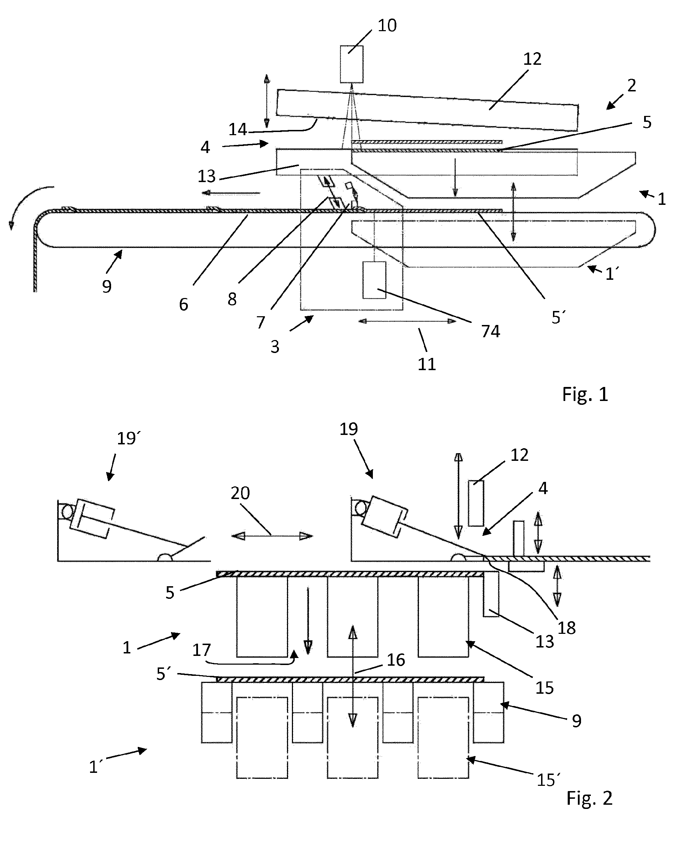

In Figur 1 ist ein Hochhalter 1 schematisch in Verbindung mit einer Schere 2 und einer Spleißeinrichtung 3 einer Cordschneidanlage dargestellt. Dabei ist der Hochhalter 1 mit durchgezogenen Linien in einer oberen Abholposition und mit dem Bezugszeichen 1' mit einer Strich-Punkt-Linie in einer unteren Abgabeposition dargestellt. Zwischen diesen beiden Positionen ist der Hochhalter 1 beziehungsweise dessen auf einem Rahmen angeordnete Hochhalterelemente vertikal auf und ab bewegbar.

Die Schere 2 ist in Materialzuführungsrichtung unmittelbar vor dem Hochhalter 1 angeordnet, sodass durch eine Messeröffnung 4 hindurchgezogenes Material auf die Hochhalterelemente abgelegt werden kann. Ein entsprechender, bereits abgeschnittener Materialstreifen 5 ist dabei auf dem Hochhalter 1 in Figur 1 abgelegt.

Indem der Hochhalter 1 beziehungsweise dessen Hochhalterelemente vertikal nach unten bewegt werden, wird der abgeschnittene Materialstreifen 5' an einer Kante überlappend auf einen bereits abgeschnittenen Materialstreifen 6 abgelegt. Zum Spleißen wird dabei eine Spleißleiste 7 nach unten bewegt und übt dabei im Wesentlichen eine vertikale Kraft auf die aufeinanderliegenden Materialstreifen aus, sodass diese ohne zusätzliche Verbindungsmittel miteinander verbunden werden. Eine sichere Positionierung des vorherigen Materialstreifens 6 innerhalb der Spleißeinrichtung wird dabei über Niederhaltepins 8 in der Spleißeinrichtung 3 realisiert.

Nach erfolgtem Verbinden des frischen Materialstreifens 5' mit dem vorhergehenden Materialstreifen 6 werden diese mittels Transportbänder 9 in einer Abtransportrichtung um die Breite eines Materialstreifens weiter bewegt.

Mithilfe einer Kamera 10 wird eine Kante des Materialstreifens 5 überwacht. Durch ein Verfahren der Spleißeinrichtung 3 mit dem Hochhalter 1 kann dann die erforderliche Überlapptoleranz der Materialstreifen erzielt werden. Damit ist eine sehr genaue, überwachte Fertigung möglich.

Die Spleißlinienverstellung, mit der auf eine Änderung der Position der Materialbahnstreifen reagiert werden kann, erfolgt dabei parallel zur Abtransportrichtung 11.

Die Schere 2 ist bei diesem Ausführungsbeispiel mit einem vertikal bewegbaren Obermesser 12 und einem stationären Untermesser 13 ausgebildet. Die Schere 2 weist also die Form einer Guillotine auf. Dabei verläuft eine Schneidkante 14 des Obermessers 12 nicht parallel zum Untermesser 13, sondern in einem Winkel dazu. Dadurch erfolgt ein allmähliches Schneiden der Materialstreifen von einem Rand zum anderen Rand.

In Figur 2 ist der Hochhalter 1 in Seitenansicht dargestellt. Der Hochhalter 1 umfasst mehrere Hochhalterelemente 15, die in einer vertikalen Richtung 16 vertikal zwischen der Abholposition und der Abgabeposition bewegbar sind. In der Abgabeposition sind die Hochhalterelemente mit Strich-Punkt-Linien dargestellt und mit dem Bezugszeichen 15' versehen.

Zwischen den Hochhalterelementen 15 sind Freiräume 17 ausgebildet, in die in der Abgabeposition die Transportbänder 9 eingreifen. Über die Transportbänder 9 können die geschnittenen Materialstreifen 5 dann von den Hochhalterelementen 15 abgehoben und abtransportiert werden.

Zum Einführen eines Materialbahnendes 18 durch die Messeröffnung 4 ist eine Rückzugseinrichtung 19 vorgesehen, die das Ende 18 ergreift und durch die Messeröffnung 4 um die gewünschte Streifenbreite zieht. Der Rückzug 19 ist dafür in einer horizontalen Richtung 20 bewegbar.

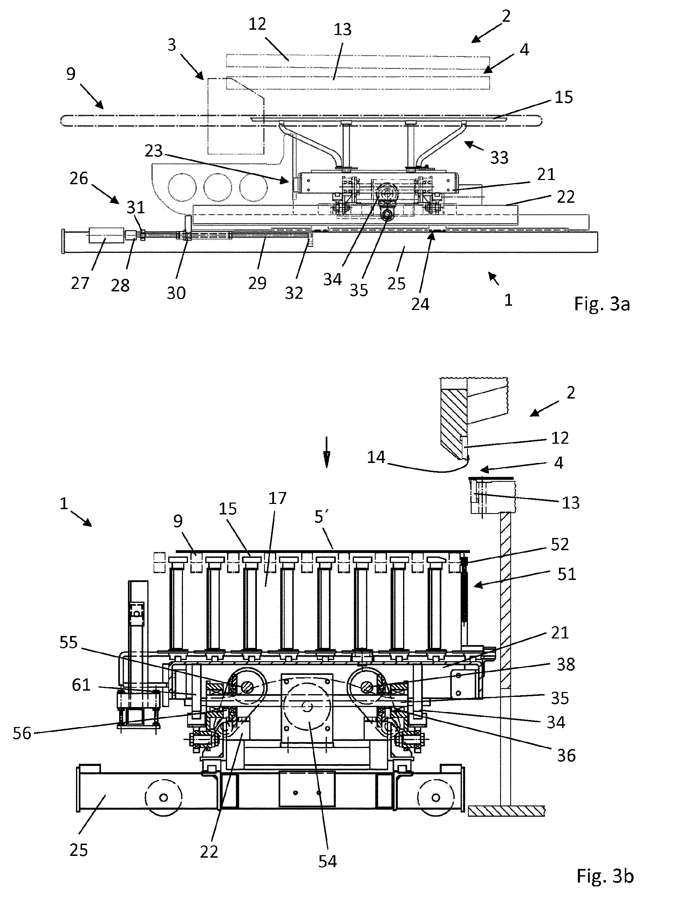

In Figur 3a ist eine vereinfachte Vorderansicht des Hochhalters 1 dargestellt, der sich in der Abgabeposition befindet. In dieser Abgabeposition sind Hochhalterelemente etwa auf Höhe der Transportbänder 9 angeordnet beziehungsweise etwas unterhalb einer Oberseite der Transportbänder 9, sodass ein Materialstreifen vom Hochhalter 1 durch die Transportbänder 9 abtransportiert werden kann.

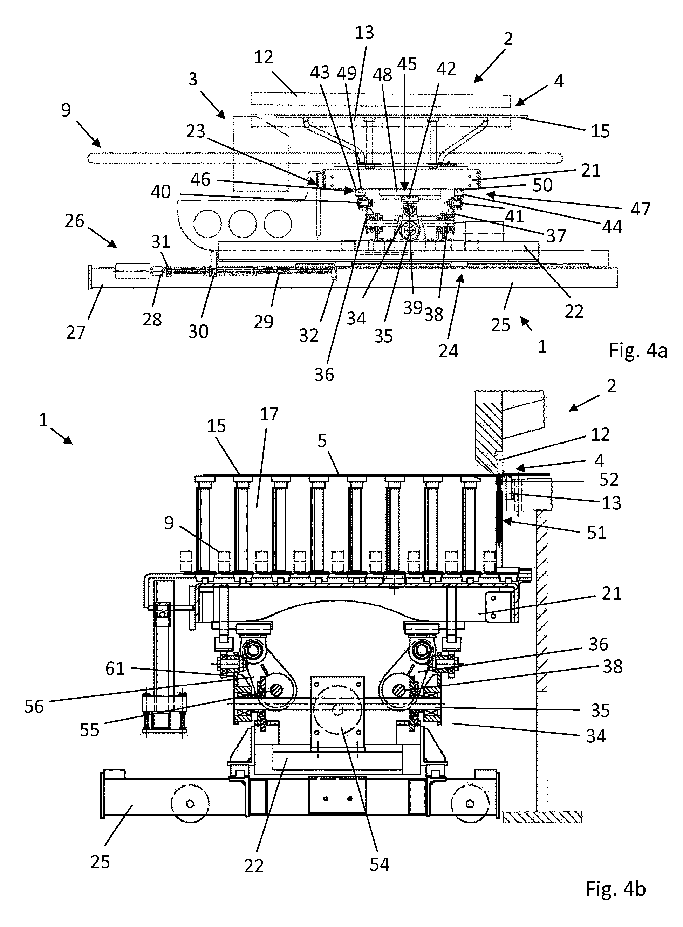

Die Hochhalterelemente 15 sind an einem Rahmen 21 befestigt, der gegenüber einem Gestell 22 vertikal zwischen der in Figur 3a gezeigten Abgabeposition und einer oberen, in Figur 4a gezeigten Abholposition bewegbar ist. Zwischen dem Gestell 22 und dem Rahmen 21 ist eine vertikale Linearführung 23 ausgebildet, über die der Rahmen 21 vertikal geführt ist. Damit wird eine höhere Steifigkeit des Hochhalters 1 erhalten.

Das Gestell 22 des Hochhalters 1 ist in einer horizontalen Richtung linear beweglich über eine horizontale Linearführung 24 an einem Grundrahmen 25 befestigt. Über die horizontale Linearführung 24 kann der Hochhalter 1 parallel zur Abtransportrichtung der Transportbänder 9 linear verschoben werden. Dafür ist ein Spindeltrieb 26 vorgesehen, der einen Antrieb 27, eine Kupplung 28, eine Spindel 29 und eine Gewindemutter 30 aufweist. Die Spindel 29 ist dabei an einer Seite in einem Festlager 31 und an einer gegenüberliegenden Seite mit einem Loslager 32 am Grundrahmen 25 gelagert.

Bei Betätigung des Antriebs 27 erfolgt eine Rotation der Spindel 29, die in einer linearen Bewegung der Gewindemutter 30 umgewandelt wird. Da die Gewindemutter 30 drehfest über eine Platte mit dem Gestell 22 verbunden ist, erfolgt so eine lineare Verschiebung des Gestells und damit des gesamten Hochhalters 1 gegenüber dem Grundrahmen 25. Dadurch kann der Hochhalter 1 an unterschiedliche Kalanderbreiten angepasst werden und es können Streifenschwankungen des ankommenden Materials ausgeglichen werden. Eine Regelung kann dabei beispielsweise mithilfe der in Figur 1 gezeigten Kamera 10 erfolgen.

Die Hochhalterelemente 15 sind am Rahmen 21 über Abstandselemente 33 befestigt, durch die jeweils eine Vakuumansaugung erfolgen kann. Alternativ kann für die Vakuumansaugung auch jeweils ein eigener Schlauch vorgesehen werden. Mithilfe dieser Abstandselemente 33 kann eine Abstützung der Hochhalterelemente 15 nahezu über deren gesamte Länge erfolgen, auch wenn diese in Längsrichtung über den Rahmen 21 hervorstehen. Dafür verlaufen beispielsweise äußere Abstandselemente 33 schräg beziehungsweise bogenförmig nach außen.

Die Ausgestaltung eines Hubsystems des Hochhalters 1, das zur Bewegung des Rahmens 21 mit den Hochhalterelementen 15 gegenüber dem Gestell 22 dient, erfolgt aufgrund der besseren Übersichtlichkeit in Bezug auf Figur 4a und Figur 4b. Diese Beschreibung ist aber größtenteils auch auf die Fig. 3a und 3b lesbar.

In Figur 4a ist der Hochhalter 1 im Unterschied zu der Darstellung nach Figur 3a in seiner oberen Abholposition dargestellt. Dafür wurde der Rahmen 21 gegenüber dem Gestell 22 vertikal nach oben verfahren. Die Hochhalterelemente 15 schließen nun bündig mit einer Schneidkante des Untermessers 13 der Schere 2 ab. Eine Materialbahn, die durch die Messeröffnung 4 bei der Darstellung nach Figur 4a aus der Zeichenebene herausgezogen wurde, kann so auf den Hochhalterelementen 15 platziert werden, ohne dass eine Welligkeit in der Materialbahn hervorgerufen wird.

Der Rahmen 21 ist über Kurbeln 34 einer Welle 35 am Gestell 22 gelagert. Ferner ist der Rahmen 21 über Kurbeln 36, 37 einer Torsionswelle 38 mit dem Gestell 22 verbunden. Die Kurbel 34 ist drehfest mit einem Ende der Welle 35 verbunden. Die Kurbeln 36, 37 sind entsprechend drehfest mit der Torsionswelle 38 verbunden. Eine derartige drehfeste Verbindung kann beispielsweise über eine Ringspannverbindung hergestellt werden.

Auch wenn es aus Fig. 4a heraus nicht ersichtlich ist, weist die Welle 35 an jedem Ende eine der Kurbel 34 entsprechende Kurbel auf.

Sowohl die Welle 35 als auch die Torsionswelle 38 verlaufen horizontal und dabei senkrecht zueinander. Gelagert sind sie jeweils drehbar am Gestell 22. Die Kurbeln 34, 36, 37 sind dabei an den durch die Lagerstellen durchgeführten Enden der Welle 35 beziehungsweise der Torsionswelle 38 jeweils paarweise befestigt. Über die Kurbeln 34, 36, 37 erfolgt also auch eine axiale Sicherung der Welle 35 beziehungsweise der Torsionswelle 38.

Während die Welle 35 mithilfe eines Antriebs über ein Reibrad- oder Zahnradgetriebe antreibbar ist, läuft die Torsionswelle 38 frei, ist also nicht mit dem Antrieb verbunden.

Die Kurbeln 34, 36, 37 sind jeweils über einen Bolzen 39, 40, 41 in einem Führungswagen 42, 43, 44 einer Linearführung 45, 46, 47 befestigt. Die Linearführungen 45, 46, 47 weisen entsprechende Führungsschienen 48, 49, 50 auf, in denen die Führungswagen 42, 43, 44 geführt sind.

Über die Linearführungen 45, 46, 47 kann eine horizontale Versatzbewegung der Kurbeln 34, 36, 37 ausgeglichen werden, sodass der Rahmen 21 mit den Hochhalterelementen 15 eine rein vertikale Bewegung ausführt, wenn die Kurbeln 34, 36, 37 bewegt werden.

Die Länge der Kurbel 34, der Welle 35 ist so gewählt, dass sie senkrecht steht, wenn der Hochhalter in seiner oberen Abholposition ist. Wie es insbesondere aus Figur 4b erkennbar ist, sind die Längen der Kurbeln 36, 37 länger als die Länge der Kurbeln der Welle 35. Dementsprechend sind sie nicht in einer senkrechten Winkellage, wenn sich der Hochhalter in der oberen Abholposition oder der unteren Abgabeposition befindet, sondern geneigt dazu. Dadurch erfolgt ein Verschwenken der Kurbeln 36, 37 auch nur über einen begrenzten Winkelbereich von weniger als 180° während der Auf- und Abbewegung des Rahmens 21 mit den Hochhalterelementen 15. Die Bewegungsrichtung kehrt sich dabei um, ist aber immer eindeutig definiert, da die Kurbeln 36, 37 nie über ihren oberen beziehungsweise unteren Umkehrpunkt hinausbewegt werden können.

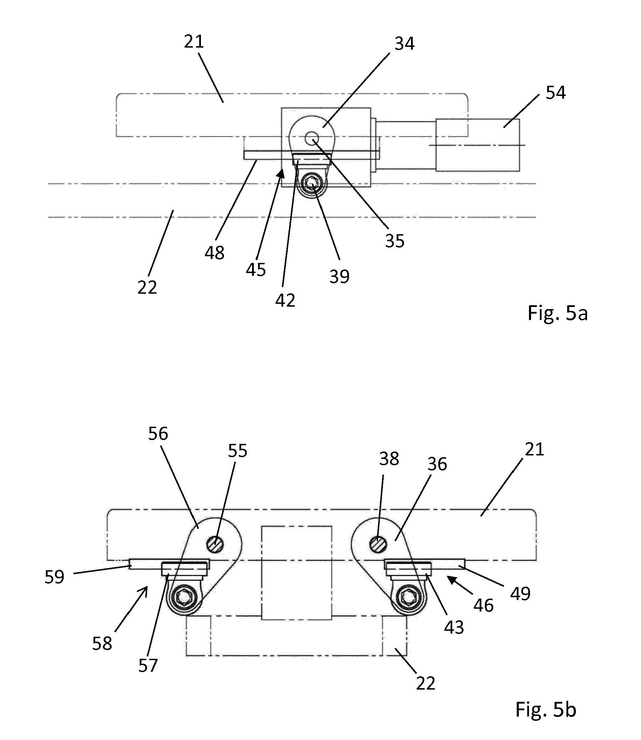

In Figur 3b beziehungsweise 4b ist zu erkennen, dass am Rahmen 21 mehrere Hochhalterelemente, in diesem Fall acht Hochhalterelemente 15 nebeneinander angeordnet sind. Zwischen den Hochhalterelementen 15 sind Freiräume 17 zur Aufnahme der Transportbänder 9 vorgesehen, die vertikal unbeweglich angeordnet sind. Auf der Seite zur Schere 2 hin neben den Hochhalterelementen 15 ist am Rahmen 21 ein Gegenhalter 51 angeordnet, der ein in Vertikalrichtung bewegbares Gegenhalterelement 52 aufweist. Der Gegenhalter 51 ist dabei fluchtend unterhalb einer Schneidkante des Obermessers 12 der Schere 2 angeordnet und wird beim Schneiden unter Klemmen des Materials durch das Obermesser 12 vertikal nach unten gegen die Kraft eines Federelements 53 gedrückt. In Figur 5a ist die Stellung der Kurbel 34 in der unteren Abholposition dargestellt. Der Führungswagen 42 befindet sich mittig auf der Führungsschiene 48 und die Kurbel 34 ist senkrecht nach unten ausgehend von der Welle 34 ausgerichtet. Zum Antrieb der Welle 34 dient ein Antrieb 54, der über ein Reibrad- oder Zahnradgetriebe mit der Welle 34 verbunden ist.

Bei der Darstellung gemäß Figur 5b ist die parallel zur Torsionswelle 38 verlaufende zweite Torsionswelle 55 erkennbar. Dementsprechend sind auch zwei Kurbeln 36, 56 zu sehen. Der Hochhalter 1 befindet sich in seiner unteren Abgabeposition. Es ist zu erkennen, dass die Kurbeln 36, 56 dabei nicht senkrecht stehen, sondern weiter in einem Winkel zueinander angeordnet sind. Dementsprechend nehmen die Kurbeln 36, 55 nicht ihren unteren Umkehrpunkt ein, sondern können nur über einen Winkel kleiner als 180° verschwenkt werden. Die Bewegungsrichtung ist dabei immer eindeutig definiert.

Führungswagen 43, 57 der entsprechenden Linearführungen 46, 58 werden auf dem zugehörigen Führungsschienen 49, 59 aufeinander zu bzw. voneinander weg bewegt. Die Angriffspunkte der Kurbeln 36, 56 verschieben sich also gleichmäßig bei einer Bewegung der Kurbeln 36, 56 beziehungsweise des Rahmens 21.

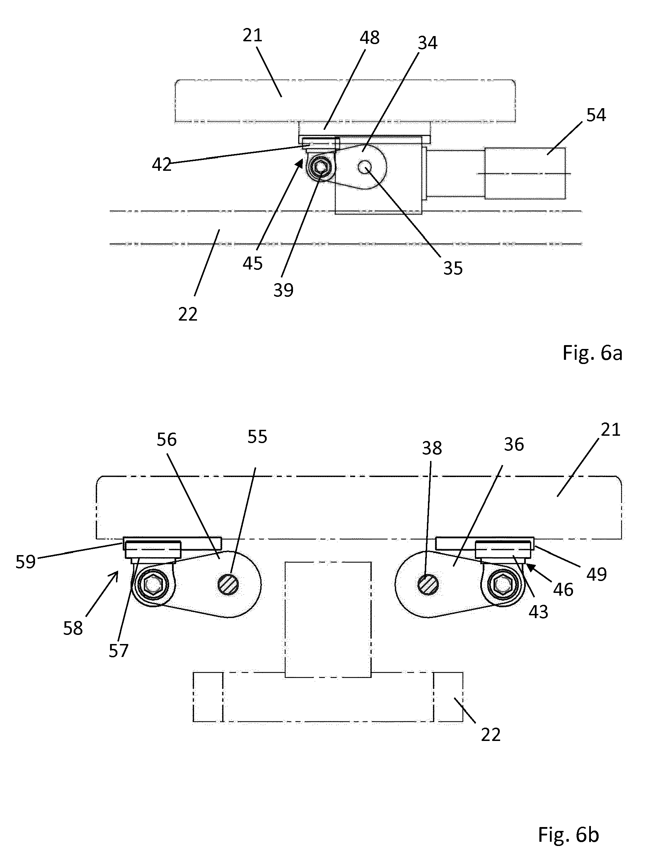

Figur 6a zeigt die Stellung der Kurbel 34 der Welle 35 und Figur 6b die Stellung der Kurbeln 36, 56 der Torsionswellen 38, 55 bei einer mittleren Position des Rahmens 21, also bei zur Hälfte ausgeführter Auf- beziehungsweise Abbewegung. Sowohl die Kurbel 34 der Welle 35 als auch die Kurbeln 56, 36 der Torsionswellen 38, 55 verlaufen dabei im Wesentlichen horizontal.

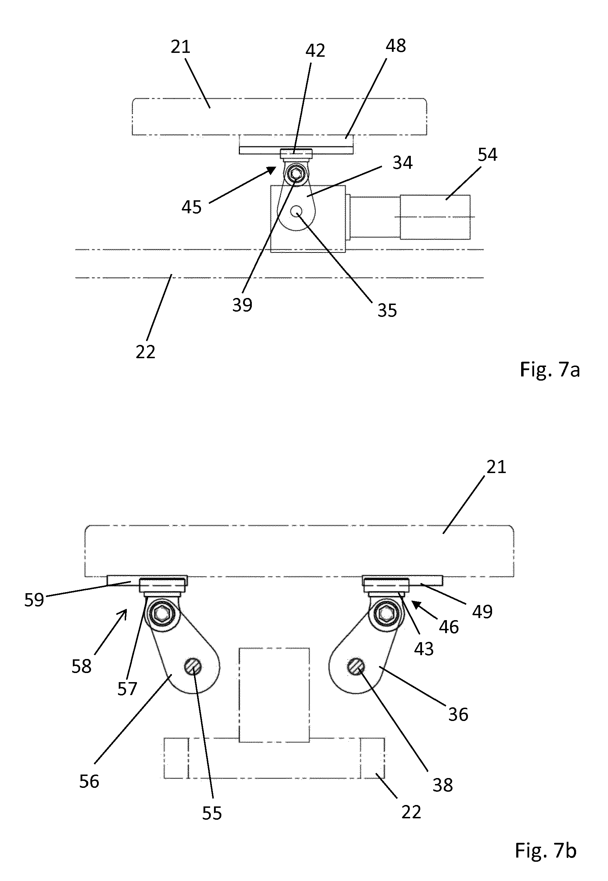

In den Figuren 7a und 7b sind die Kurbel 34 der Welle 35 sowie die Kurbeln 36, 56 der Torsionswellen 38, 55 in der Position dargestellt, die sie in der oberen Abholposition des Hochhalters 1 einnehmen. Die Kurbel 34 der Welle 35 erstreckt sich dabei senkrecht nach oben, während die Kurbeln 36, 56 der Torsionswellen 38, 55 voneinander weggeneigt sind. Auch in der oberen Abholposition erreichen die Kurbeln 36, 56 der Torsionswellen 38, 55 also nicht ihren oberen Umkehrpunkt. Dementsprechend ist ein Winkelbereich, über den eine Bewegung der Kurbeln 36, 56 erfolgt, relativ begrenzt.

Die Kurbeln 36, 56 bewegen sich dabei im Gleichlauf und in entgegengesetzten Drehrichtungen. Eine entgegengesetzte Drehrichtung ist aber nicht unbedingt erforderlich. Dadurch können außermittige Kräfte, die auf den Rahmen 21 über die Hochhalterelemente 15 wirken, gleichmäßig aufgenommen werden und eine Torsion bzw. Verkippung des Rahmens 21 verhindert werden.

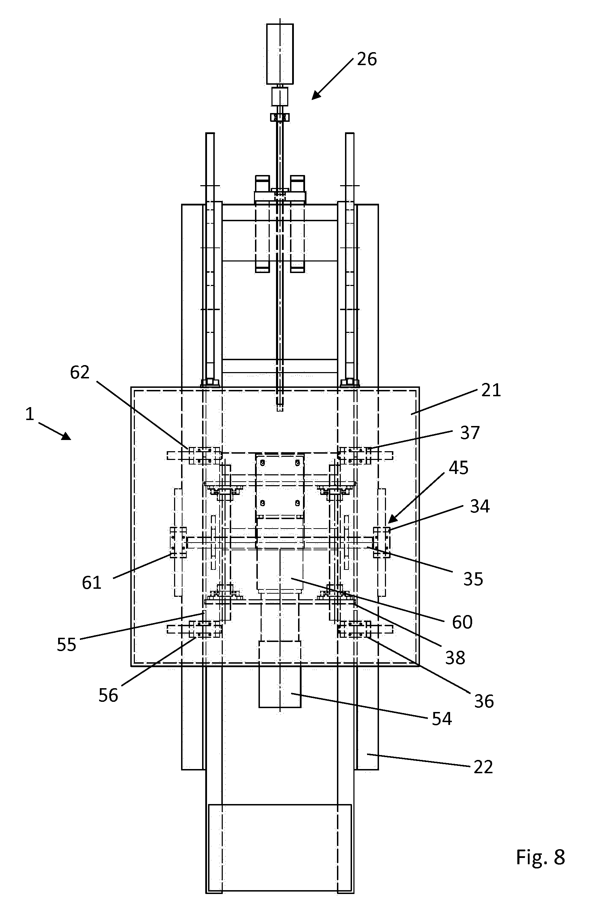

In Figur 8 ist eine Draufsicht auf den Hochhalter 1 dargestellt. Über den Antrieb 54 wird mittels eines Reibrad- oder Zahnradgetriebes 60 die Welle 35 angetrieben. Die Welle 35 ist an ihren Enden mit Kurbeln 34, 61 versehen. Dabei verläuft die Welle 35 in etwa mittig mit dem Rahmen 21.

Die Welle 35 und die Torsionswellen 38, 55 verlaufen dabei horizontal, also parallel zur Zeichenebene gemäß Figur 8, wobei die Torsionswellen 38, 55 senkrecht zur Welle 35 verlaufen. Dabei sind die Torsionswellen 38, 55 nahezu symmetrisch bezüglich einer Mittelachse des Rahmens 21 angeordnet.

Durch diese Anordnung ist der Rahmen an insgesamt sechs Stellen über Kurbeln beziehungsweise Wellen oder Torsionswellen abgestützt. Dadurch können auch außermittige Belastungen gut aufgenommen werden, ohne das ein Verkippen des Rahmens 21, beziehungsweise der daran angeordneten Hochhalterelemente, zu befürchten ist. Insgesamt wird eine sehr steife Konstruktion erhalten.

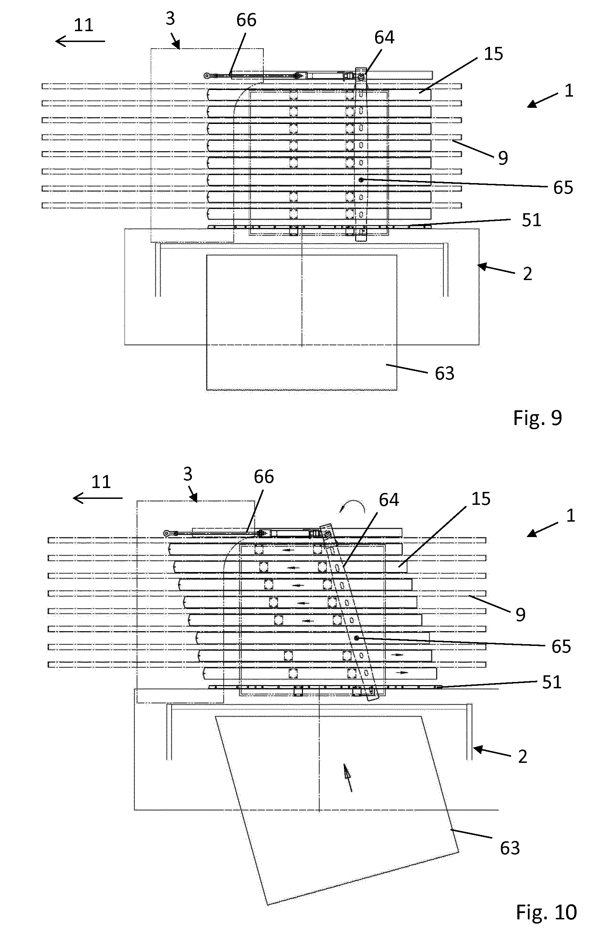

In Figur 9 ist eine Draufsicht des Hochhalters 1 dargestellt, bei der die einzelnen Hochhalterelemente 15 zu sehen sind. Die Hochhalterelemente 15 und der Gegenhalter 51 verlaufen dabei parallel zueinander und sind nebeneinander angeordnet.

Eine Materialbahn 63 insbesondere aus Cordmaterial mit einer Verstärkung aus Textil- und Stahldrähten, wird der Schere 2 in einem rechten Winkel zugeführt. Dementsprechend sind auch die Hochhalterelemente 15 so angeordnet, dass sie senkrecht übereinander liegen und ein durch die Schere 2 gezogenes Ende der Materialbahn 63 abstützen können.

Bei einer derartigen Konstellation werden rechteckige Streifen von der Materialbahn 63 abgeschnitten. Während des Schneidvorgangs liegt der Streifen auf den Hochhalterelementen 15 auf und wird nach Abschluss des Schneidvorganges durch die Hochhalterelemente 15 vertikal nach unten verfahren und auf den Transportbändern 9 abgelegt. Gegebenenfalls nach Herstellen einer Spleißverbindung werden die Streifen dann mit den Transportbändern 9 in Abtransportrichtung 11, die bei diesem Ausgangsbeispiel senkrecht zur Zuführrichtung liegt, abtransportiert.

In Figur 10 ist eine Situation dargestellt, bei der die Materialbahn 63 nicht rechtwinklig, sondern in einem abweichenden Winkel zur Schere 2 zugeführt wird. Über eine Winkelverstellung sind dabei die einzelnen Hochhalterelemente 15 in deren Längsrichtung relativ zueinander versetzt worden, um die gesamten zugeführten Streifen der Materialbahn abstützen zu können.

Für die Winkelverstellung sind die einzelnen Hochhalterelemente 15 über eine Mitnehmerplatte 64 miteinander verbunden. Durch Verschwenken der Mitnehmerplatte 64 um einen Drehpunkt 65 folgt eine Relativbewegung der Hochhalterelemente 15, wobei die fünf oberhalb des Drehpunktes 65 angeordneten Hochhalterelemente in eine Richtung, in der gezeigten Darstellung nach links, und die unterhalb des Drehpunktes 65 angeordneten beiden Hochhalterelemente in die entgegengesetzte Richtung, gemäß Figur 10 nach rechts, bewegt werden. Das Hochhalterelement 15, das auf einer Linie mit dem Drehpunkt 65 liegt, behält seine Stellung bei.

Ein Abstand zwischen den anfallenden Hochhalterelementen 15 und damit die Größe der Freiräume 17 bleibt bei der Winkelverstellung unverändert, da die Transportbänder 9 weiterhin in diesen Freiräumen bewegbar sein sollen. Dies kann beispielsweise dadurch realisiert werden, dass die Hochhalterelemente unterseitig beispielsweise über Zapfen in jeweils einen Langloch der Mitnehmerplatte eingreifen.

Für das Verschwenken der Mitnehmerplatte 64 kann ein eigenständiger Antrieb vorgesehen werden. Im gezeigten Ausführungsbeispiel erfolgt das Verschwenken aber über eine mechanische Kopplung 66 mit der Spleißeinrichtung 3, die ebenfalls eine Winkelverstellung aufweist. Dadurch wird eine gleichmäßige Verstellung gewährleistet und es wird nur ein einziger Antrieb benötigt.

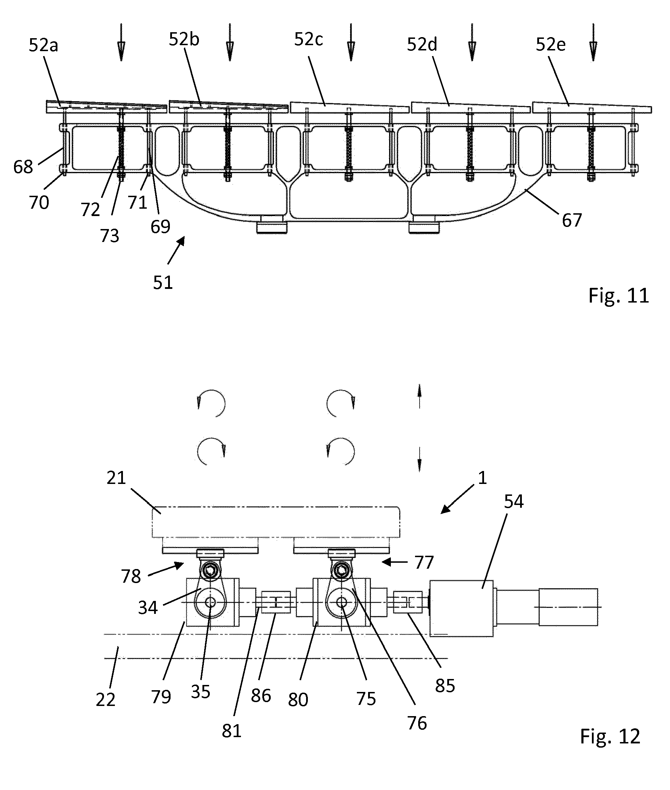

In Figur 11 ist eine Einzeldarstellung des Gegenhalters 51 mit mehreren Gegenhalterelementen 52a, 52b, 52c, 52d, 52e gezeigt. Die Gegenhalterelemente 52 weisen jeweils eine geneigte Oberfläche auf, sodass der Gegenhalter 51 insgesamt im Querschnitt ein Sägezahnprofil aufweist.

Die Gegenhalterelemente 52a-e sind in einem Rahmen 67 des Gegenhalters 51 vertikal bewegbar geführt. Dafür sind die Gegenhalterelemente 52 jeweils beidseitig über Führungsstangen 68, 69 und Kugelbüchsen 70, 71 am Rahmen 67 geführt. Dabei ist unter jedem Gegenhalterelement 52 ein Federelement 72 angeordnet, dass das Gegenhalterelement 52 in seine obere Position drückt und bei Druck von oben eine vordefinierte Gegenkraft erzeugt. Eine Führung 73 der Feder dient gleichzeitig zur Einspeisung von Vakuum für eine in den Gegenhalterelementen ausgebildete Vakuumansaugung.

An der Oberfläche können die Gegenhalterelemente 52 mit einer Antihaftbeschichtung versehen sein, um für den Abtransport durch Transportbänder 9 ein einfacheres Ablösen des geschnittenen Streifens zu gewährleisten.

Mithilfe des Gegenhalters 51 erfolgt die erste Unterstützung für das Material nach Durchlaufen der Messeröffnung. Beim Schneiden drückt dabei das Obermesser durch den Materialstreifen auf die Gegenhalterelemente 52 und bewegt diese dadurch vertikal nach unten. Dabei wird eine Klemmkraft erzeugt, durch die der geschnittene Streifen sicher positioniert wird.

Die geneigte Ausgestaltung der Oberflächen der Gegenhalterelemente 52 ist dann vorteilhaft, wenn das Obermesser ebenfalls unter einem Schneidwinkel angeordnet ist und der Schnitt durch das Material linienförmig verläuft. Die Gegenhalterelemente 52 werden dann nacheinander vertikal nach unten gedrückt.

Der Gegenhalter 51 ist am Rahmen 21 über eine Linearführung gelagert und wird in seiner Längsrichtung bei einer Winkelverstellung des Hochhalters ebenfalls bewegt.

In Fig. 12 ist eine Alternative Ausgestaltung des Hochhalters 1 dargestellt, der zwei angetriebene Wellen 35, 75 aufweist, die jeweils an ihren Enden mit Kurbeln 34, 76 versehen sind. Die Kurbeln sind wie im vorherigen Ausführungsbeispiel zum Ausgleich eines Drehversatzes über Linearführungen 77, 78 am Rahmen 21 gelagert.

Die Wellen, die im Gestell 22 drehbar gelagert sind, sind dabei jeweils über ein als Kegelradgetriebe ausgebildetes Getriebe 79, 80 mit einer ebenfalls im Gestell drehbar gelagerten Antriebswelle 81 des Antriebs 54 verbunden. Eine Rotation des Antriebs 54 bzw. der Antriebswelle 81 bewirkt dabei eine gegensinnige Drehung der Wellen 37,76 bzw. der an deren Enden angeordneten Kurbeln 34, 76.

Durch die Kegelradgetriebe 79, 80 erfolgt eine relativ starre, spielfreie und verschleißarme Verbindung zwischen den Wellen 35, 75 und dem Motor 54. Dabei können die Wellen 35, 75 durchgehend ausgebildet sein, also durch eine Abtriebsbohrung der Kegelradgetriebe 79, 80 hindurch geführt sein. Ebenso kann die Antriebswelle 81 des Antriebs 54 durch entsprechende Bohrungen der Kegelradgetriebe 79, 80 hindurch laufen. Im vorliegenden Ausführungsbeispiel ist die Antriebswelle 81 aber mehrteilig aufgebaut und weist dementsprechende Kopplungselemente 85, 86 zur Verbindung der einzelnen Wellenteile auf. Damit wird eine sehr stabile Anordnung erhalten, bei der auch höhere Drehmomente übertragbar sind.

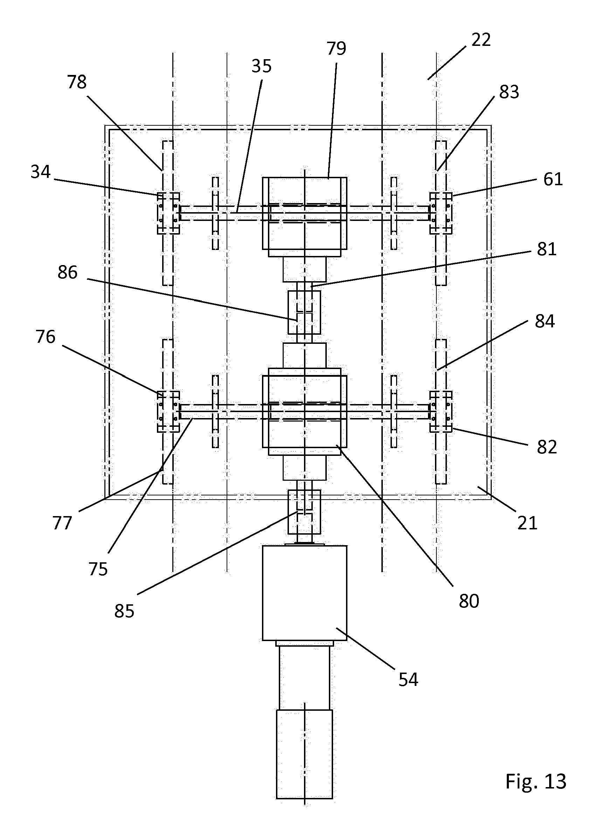

Fig. 13 zeigt eine Draufsicht auf den Hochhalter 1 gemäß Fig. 12. Die Wellen 35, 75 verlaufen parallel zueinander und sind symmetrisch zu einer Mittellinie des Rahmens 21 angeordnet. An beiden Enden der Wellen 35, 75 sind Kurbeln 34, 76, 61, 82 vorgesehen, die jeweils über Linearführungen 77, 78, 83, 84 am Rahmen horizontal verschiebbar über Führungswagen und Führungsschienen gelagert sind.

Die Antriebswelle 81 des Antriebs 54 verläuft senkrecht zu den Wellen 35, 75. Dabei verlaufen sowohl die Wellen 35, 75 als auch die Antriebswelle 81 horizontal und zumindest im Wesentlichen unterhalb des Rahmens 21 bzw. zwischen Rahmen 21 und Gestell 22, während der Antrieb 54 seitlich davon angeordnet ist. Der Antrieb 54 schränkt dadurch den für die Auf- und Ab- Bewegung des Hochhalters erforderlichen Raum nicht ein und kann so problemlos eine größere Baugröße aufweisen.

Im Übrigen entspricht die in Fig. 12 und 13 gezeigte Ausgestaltung des Hochhalters 1 dem in den übrigen Figuren beschriebenen Ausführungsbeispiel.

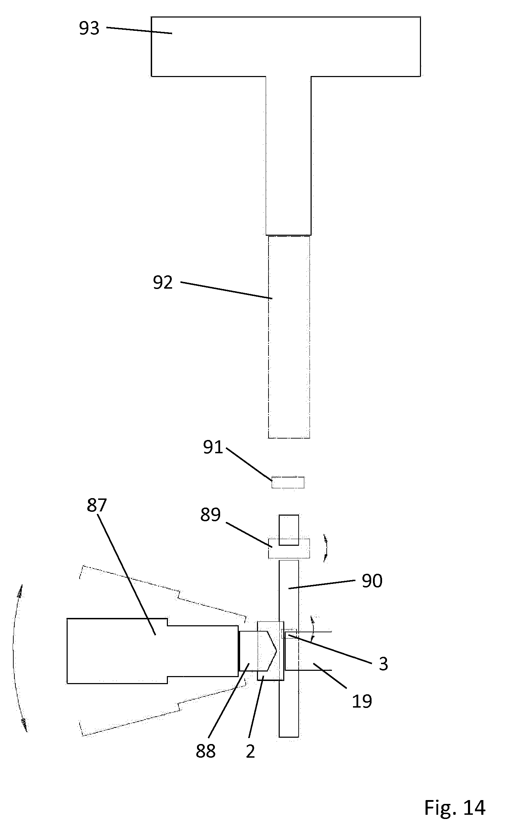

In Figur 14 ist ein typisches Anlagenlayout schematisch in Draufsicht dargestellt, in dem die Schere 2 mit dem Hochhalter 1 und der Spleißeinrichtung 3 als Einheit eingesetzt wird. Die Materialbahn wird dabei von Vorratsrollen in einem Abwickler 87 abgezogen und über einen Tisch 88 der Schere 2 zugeführt. Die mit der Materialbahn bewickelten Rollen werden dafür im Abwickler 87 eingehängt und ausgewickelt. Dabei wird die zu verarbeitende Materialbahn, beispielsweise eine kombinierte Cordbahn, von einer Zwischenlage getrennt, die als Folie, aus Leinen oder ähnlichem hergestellt ist, die dazu dient, ein Verkleben des üblicherweise gummierten Bandes zu verhindern. Der Abwickler 87 kann dabei als Einfachabwickler ausgebildet sein, bei dem nur eine einzige Rolle eingehängt ist, oder auch als Doppelabwickler mit einem Drehtisch zum Einhängen von mindestens zwei Materialrollen, wobei von einer Rolle das Band abgezogen wird, während die andere ausgetauscht werden kann. Anstelle eines Drehtisches kann dabei auch ein Shuttle-Rahmen vorgesehen werden. Die Rolle kann je nach Ausführung direkt im Abwickler aufgehängt werden, oder in einer Kassette angeordnet sein, die in dem Abwickler untergebracht wird. Weitere Ausgestaltungen des Abwicklers sind ebenfalls möglich.

Um verschiedene Schneidwinkel zu realisieren, ist der Abwickler 87 gegenüber der Schere 2 verschwenkbar angeordnet. Dabei wird der zwischen Abwickler 87 und Schere 2 vorgesehene Tisch 88 im Bedarfsfall gemeinsam mit dem Abwickler 87 verschwenkt. Die zu verarbeitende Materialbahn wird über den Tisch 88 in die Schere 2 gezogen. Um den Anfang der Materialbahn einer neuen Rolle zur Schere 2 zu transportieren, ist es bekannt, am Anfang des Tisches 88 oder darüber eine nicht dargestellte Fördereinrichtung vorzusehen. Diese Fördereinrichtung kann beispielsweise eine angetriebene Förderrolle sein.

Mit Hilfe der Schere 2 werden von der Materialbahn Streifen in einer definierten Breite und in einem definierten Winkel abgeschnitten. Alternativ zu einer Schere, die in Form einer Guillotine mit Obermesser und Untermesser aufgebaut ist, können auch andere Typen Verwendung finden. Beispielsweise gibt es Rundmesserscheren mit einem feststehenden Untermesser und einem daran entlangfahrenden Rundmesser sowie Scheren mit einem schnell rotierenden Sägemesser, die ähnlich wie eine Kreissäge aufgebaut sind.

Um nach dem Abschneiden des Streifens den neuen Materialbahnanfang erneut durch die Messeröffnung von der Zuführseite auf die Abtransportseite zu fördern und um die gewünschte Streifenbreite zu ziehen, ist in Zuführrichtung hinter der Messeröffnung bzw. dem Schneidspalt, also auf der Abtransportseite, der Rückzug 19 angeordnet. Eine Ausgestaltung eines derartigen Rückzugs ist beispielsweise in DE 10 113 379 beschrieben.

Anschließend werden die abgeschnittenen Materialbahnstreifen mit ihren an die Schneidkante angrenzenden Kanten wieder miteinander verbunden. Dafür sind an der Abtransportseite der Schere 2 eine oder mehrere Spleißeinrichtungen vorgesehen, in diesem Fall der Überlappspleißer 3 und ein Stumpfspleißer 89. Beim Spleißen handelt es sich um ein rein mechanisches Verbinden ohne Zuhilfenahme von Zusatzstoffen, wobei die von der Schere 2 abgeschnittenen Streifen an ihren schmalen Seiten miteinander verbunden werden. Häufig wird dabei ein Überlappspleißer eingesetzt, bei denen die Enden der Streifen überlappend zueinander gelegt werden und durch Druckbeaufschlagung im Überlappspleißer überlappend miteinander verbunden werden. Der Spleißer ist dabei in der Regel verschwenkbar, um die Streifen in verschiedenen Winkeln verarbeiten zu können. Es ist aber auch üblich, feststehende Spleißer vorzusehen.

Während der Überlappspleißer 3 als Einheit mit dem hinter der Messeröffnung angeordneten Hochhalter 1 ausgebildet ist, wird der Stumpfspleißer 89 alternativ oder zusätzlich mit einem gewissen Abstand dazu angeordnet, wobei die abgeschnittenen Materialbahnstreifen durch eine Fördereinrichtung 90, wie beispielsweise ein Transportband, zum Stumpfspleißer 89 gefördert werden. Dort werden die Materialbahnstreifen stumpf miteinander verbunden.

Die Fördereinrichtung 90 wird in jedem Fall schrittweise um jeweils eine Streifenlänge vorwärtsbewegt, um die jeweils abgeschnittenen Materialbahnstreifen hintereinander auf der Fördereinrichtung 90 positionieren zu können.

Die wieder miteinander verbundenen Materialbahnstreifen werden über eine optionale Beruhigungsrolle 91 und über eine optionale Belegvorrichtung 92 einem Aufwickler 93 zugeführt. In der Belegvorrichtung 92 können weitere Gummistreifen, beispielsweise bis zu 12 Stück, gleichzeitig auf die miteinander verbundenen Streifen aufgelegt werden. Dabei kann auch eine Einfassung von Außenkanten erfolgen, indem beispielsweise ein Gummistreifen an der Außenkante mit Überstand aufgelegt und um die Kante herumgelegt wird. Damit wird ein an der Außenkante freiliegender Cord ummantelt.

Im Aufwickler 93 werden die miteinander verbundenen Materialbahnstreifen wieder auf Spulen aufgewickelt. In der Regel wird dabei eine Zwischenlage, die ein Verkleben der einzelnen Lagen verhindert, mit aufgewickelt. Für den Aufwickler gibt es verschiedenste Ausführungsformen: Der Aufwickler kann beispielsweise als Einfachaufwickler ausgebildet sein, in dem die miteinander verbundenen Streifen manuell abgelenkt und einer neuen Rolle zugeführt werden müssen, es ist aber auch bekannt, vollautomatische Aufwickler vorzusehen, in denen für das Handling keine Bedienereingriffe notwendig sind.

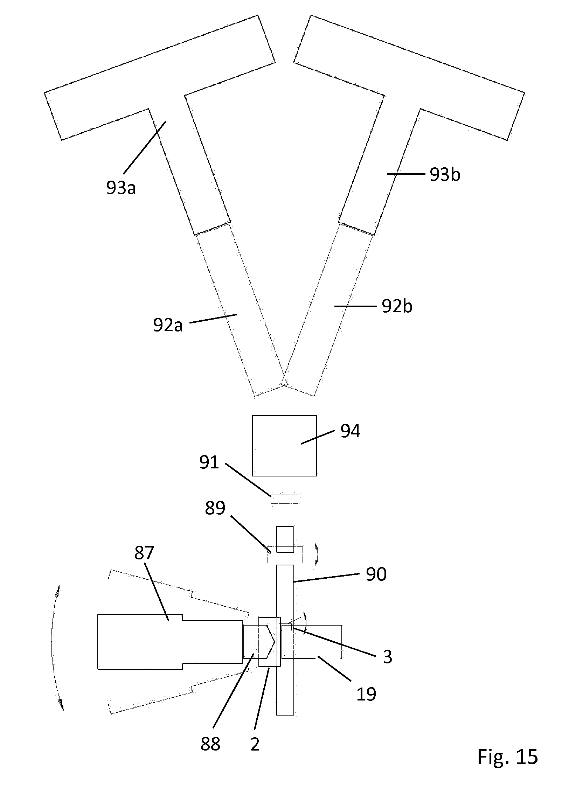

In Fig. 15 ist ein erweitertes Gesamtanlagenlayout dargestellt, bei dem im Anschluss an die Spleißeinrichtungen gegebenenfalls hinter einer optionalen Beruhigungsrolle 91 eine Längsschneideeinrichtung 94 vorgesehen ist, durch die die erzeugte Streifenbahn geführt und dabei beispielsweise in zwei Längsbahnen getrennt wird. Diese beiden Längsbahnen werden dann zwei Aufwicklern 93a, 93b zugeführt. Damit wird ein Ausstoß der Anlage erhöht. In der Längsschneidevorrichtung 94, die auch als Slitter bezeichnet wird, finden in der Regel Rundmesser Verwendung.

Zwischen der Längsschneideeinrichtung 94 und dem Aufwicklern 93a, 93b können optional, wie auch im Gesamtanlagenlayout nach Fig. 19, entsprechend aufgebaute Belegevorrichtungen 92a, 92b vorgesehen sein

In den Figuren 14 und 15 sind nur zur Veranschaulichung typische Anlagenlayouts dargestellt. Ein spiegelbildlicher Aufbau ist beispielsweise ebenfalls problemlos möglich, wie auch das Vorsehen zusätzlicher oder das Weglassen einzelner Anlagenelemente.

Ein üblicher Verfahrensablauf sieht beispielsweise folgendermaßen aus:
Bei geöffneter Schere wird mithilfe des Rückzugs 19 das Ende der Materialbahn 63 durch die Messeröffnung 4 zwischen Obermesser und Untermesser hindurchgezogen und auf die Hochhalterelemente abgelegt. Der Rückzug 19 kann dabei beispielsweise über zwei zueinander rechtwinklige Achsen angesteuert werden, sodass unterschiedliche Zuführwinkel realisierbar sind. Der Hochhalter 1 befindet sich dabei in seiner oberen Abholposition.

Über die Kamera 10 wird eine Kante der zugeführten Materialbahn 63 überwacht, sodass die Ablageposition des abzuschneidenden Streifens auf den Hochhalter 1 genau bekannt ist. Damit lässt sich eine gewünschte Überlappung mit einem bereits auf den Transportbändern befindlichen, vorher geschnittenen Streifen einstellen. Dafür wird eine Spleißverstellung entsprechend angesteuert, sodass immer eine gewünschte Überlappung im Spleißbereich erreicht wird.

Vor Beginn des Schneidvorganges fährt ein Niederhalter der Schere 2 ab und hält das vor der Schere 2 befindliche Material während des Schneidens. Anschließend wird der eigentliche Schneidvorgang durchgeführt, beispielsweise durch Abfahren des Obermessers oder bei einer anderen Ausgestaltung der Schere 2 durch Bewegen einer runden Messerschere oder Rundmessersäge. Der Rückzug 19 wurde dabei vorher bereits gelöst und fährt ein Stück nach hinten, sodass das Materialbahnende freigegeben wird. Direkt hinter dem Untermesser wird das Material beziehungsweise der abzuschneidende Streifen durch den Gegenhalter 51 mit den Gegenhalterelementen sowie den Hochhalterelementen gestützt und während des Schneidvorganges gehalten. Der fluchtend mit dem Obermesser angeordnete Gegenhalter 51 klemmt dabei mit dem Obermesser das Material stufenweise zwischen sich ein und verhindert so, dass der Streifen beim Schneiden seine Position ändert. Eine zusätzliche Lagefixierung kann durch Vakuumansaugung erreicht werden, wobei einzelne oder alle Gegenhalterelemente und/oder Hochhalterelemente mit einer Vakuumansaugung versehen sind.

Um auch nach dem Schneidvorgang den geschnittenen Streifen auf den Hochhalterelementen zu fixieren, weisen diese eine Vakuumansaugung auf. Der Materialstreifen wird dann an die Hochhalterelemente angesaugt und während der schnellen Abwärtsbewegung des Rahmens mit den Hochhalterelementen, die die Erdbeschleunigung überschreitet, in dieser Position gehalten. Dabei ist günstigenfalls das Vakuum für jeden Hochhalter einzeln ansteuerbar, um diese je nach zu verarbeitender Materialbahnbreite zu- oder abschalten zu können, um so den Energieverbrauch durch das Abschalten nicht benötigter Hochhalterelemente zu begrenzen und damit das Vakuum an den anderen Hochhalterelementen zu erhöhen.

Anstelle einer Vakuumansaugung kann auch eine andersartige Fixierung des Materialstreifens auf den Hochhalterelementen erfolgen. Ohne das Vorsehen einer derartigen Fixierung müsste eine Ablaufgeschwindigkeit der Hochhalterelemente reduziert werden, um ein Verrutschen der Streifen zu verhindern.

Die Hochhalterelemente verlassen so die Abholposition und verfahren nach unten in die Abgabeposition. Dabei wird der neue Materialstreifen bei Verwendung eines Überlappspleißers auf einen bereits im Spleißer liegenden, vorher geschnittenen Materialstreifen mit einer gewünschten Kantenüberlappung abgelegt. Zur Feineinstellung der Überlappung ist dafür die Spleißeinrichtung mithilfe der Kamera während des Ziehens des Materialbahnendes eingestellt worden. Dadurch können Ungenauigkeiten und Schwankungen der Materialbahnkante ausgeglichen werden.

In der Abgabeposition liegt eine Oberfläche der Hochhalterelemente unterhalb einer Auflagefläche der Transportbänder, die in den Freiräumen zwischen den Hochhalterelementen angeordnet sind. Dementsprechend wird der Materialbahnstreifen von den Hochhalterelementen auf die Transportbänder übergeben und kann nach Herstellen der Spleißverbindung um eine Streifenbreite abtransportiert werden, sodass die Hochhalterelemente frei sind und wieder nach oben in die Abholposition verfahren werden können.

Sobald die Hochhalterelemente ihre obere Abholposition verlassen haben, wird mithilfe des Rückzugs ein neues Materialbahnende durch die Messeröffnung der Schere hindurchgezogen. Zum einfacheren Ergreifen des Materialbahnendes durch den Rückzug kann dieses am Ende vor der Schere leicht angehoben werden.

In der Spleißeinrichtung wird der neu abgeschnittene Materialbahnstreifen mit dem bereits im Spleißer liegenden Materialbahnstreifen mit einer hohen Festigkeit verbunden. Dafür drückt eine Spleißleiste beim Überlappspleißen auf den überlappenden Bereich der beiden Materialbahnstreifen. Der auf den Transportbändern liegende Teil des Materialbahnstreifens wird dabei beispielsweise mit Hilfe von Vakuum auf den Bändern fixiert.

Falls kein Überlappspleißer verwendet werden soll, sondern ein Stumpfspleißen vorgesehen ist, wird ein möglicherweise vorhandener Überlappspleißer deaktiviert und der geschnittene Materialstreifen an den vorhergehenden Materialstreifen auf den Transportbändern stumpf anschließend abgelegt. Nach Aktivieren einer Vakuumansaugung der Transportbänder erfolgt dann ein weiterer Transport der Materialbahnstreifen in einen Stumpfspleißer, der in der Regel zum Hochhalter beabstandet angeordnet wird. Dieser Abstand wird dann mithilfe der Transportbänder überbrückt.

Beim Abtransport der miteinander verbundenen Materialbahnstreifen kann, unabhängig von den verwendeten Spleißverfahren, ein Ausrichten erfolgen. Ein entsprechendes System ist beispielsweise in DE 10 119 508 C1 beschrieben. Dabei sind zwischen den einzelnen Transportbändern Lichtschranken angeordnet, die ein Ende der Materialbahnstreifen erkennen. Einzelne Lichtschranken werden frei, wenn das Ende des Materialbahnstreifens darüber transportiert wird. Jeder Lichtschranke ist dabei ein Niederhalterpin in der Spleißeinrichtung zugeordnet, der beim Freiwerden der Lichtschranke abfährt und das Material in der Spleißeinrichtung festklemmt. Das Transportband fährt dann solange weiter, bis alle Lichtschranken frei sind, beziehungsweise alle Niederhaltepins auf das Material drücken. Durch das Weiterfahren des Transportbandes erfolgt eine Geradeausrichtung des Endes der Materialbahnstreifen. Eine entsprechende Lichtschranke ist in Fig. 1 dargestellt und mit dem Bezugszeichen 74 versehen.

Durch eine Ausbildung von Hochhalter, Spleißeinrichtungen und Schere als Einheit ist es möglich, Transportwege des geschnittenen Materialbahnstreifens möglichst gering zu halten. Im Wesentlichen wird der geschnittene Materialbahnstreifen frei dann nur durch den Hochhalter von der oberen Abholposition in die untere Abgabeposition bewegt und dort direkt mittels Spleißen mit den vorher geschnittenen Materialbahnstreifen verbunden. Dadurch ist ein sehr hoher Ausstoß, also eine hohe Produktivität, erreichbar.

Wenn die Materialbahn nicht rechtwinklig der Schere zugeführt wird, sondern in einem abweichenden Winkel, sind eine Einstellung des Spleißwinkels sowie eine Winkelverstellung der Hochhalter erforderlich. Dabei werden die Hochhalterelemente über eine Mitnehmerplatte in ihrer Längsrichtung verschoben. Die Mitnehmerplatte kann dabei separat von der Spleißeinheit angetrieben werden, oder aber auch über ein Koppelelement mechanisch mit der Spleißeinheit verbunden sein.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Hochhalter
- 2: Schere
- 3: Spleißeinrichtung
- 4: Messeröffnung
- 5: Materialbahnstreifen
- 6: Vorheriger Materialbahnstreifen
- 7: Spleißleiste
- 8: Niederhaltepin
- 9: Transportband
- 10: Kamera
- 11: Abtransportrichtung
- 12: Obermesser
- 13: Untermesser
- 14: Schneidkante
- 15: Hochhalterelemente
- 16: Vertikalrichtung
- 17: Freiräume
- 18: Materialbahnende
- 19: Rückzug
- 20: Horizontale Richtung
- 21: Rahmen
- 22: Gestell
- 23: Vertikale Linearführung
- 24: Horizontale Linearführung
- 25: Grundrahmen
- 26: Spindeltrieb
- 27: Antrieb
- 28: Kupplung
- 29: Spindel
- 30: Mutter
- 31: Festlager
- 32: Loslager
- 33: Abstandelemente
- 34: Kurbel
- 35: Welle
- 36: Kurbel
- 37: Kurbel
- 38: Torsionswelle
- 39: Bolzen
- 40: Bolzen
- 41: Bolzen
- 42: Führungswagen
- 43: Führungswagen
- 44: Führungswagen
- 45: Linearführung
- 46: Linearführung
- 47: Linearführung
- 48: Führungsschiene
- 49: Führungsschiene
- 50: Führungsschiene
- 51: Gegenhalter
- 52: Gegenhalterelement
- 53: Federelement
- 54: Antrieb
- 55: Torsionswelle
- 56: Kurbel
- 57: Führungswagen
- 58: Linearführung
- 59: Führungsschiene
- 60: Getriebe
- 61: Kurbel
- 62: Kurbel
- 63: Materialbahn
- 64: Mitnehmerplatte
- 65: Drehpunkt
- 66: Kopplungselement
- 67: Rahmen
- 68: Führungsstangen
- 69: Führungsstangen
- 70: Kugelbuchsen
- 71: Kugelbuchsen
- 72: Federelement
- 73: Führung
- 74: Lichtschranke
- 75: Welle
- 76: Kurbel
- 77: Linearführung
- 78: Linearführung
- 79: Kegelradgetriebe
- 80: Kegelradgetriebe
- 81: Antriebswelle
- 82: Kurbel
- 83: Linearführung
- 84: Linearführung
- 85: Wellenkopplungselement
- 86: Wellenkopplungselement
- 87: Abwickler
- 88: Tisch
- 89: Stumpfspleißer
- 90: Fördereinrichtung
- 91: Beruhigungsrolle
- 92: Belegvorrichtung
- 93: Aufwickler
- 94: Längsschneidevorrichtung

## Patentansprüche

1. Hochhalter für eine Cordschneidanlage mit einem Gestell (22) und einem Rahmen (21), der gegenüber dem Gestell (22) vertikal zwischen einer oberen Abholposition und einer unteren Abgabeposition bewegbar ist, wobei am Rahmen (21) mehrere Hochhalterelemente (15) nebeneinander angeordnet sind, zwischen denen Freiräume (17) für Transportbänder (9) ausgebildet sind, wobei am Gestell (22) mindestens eine Welle (35, 75) drehbeweglich gelagert ist, die an ihren Enden jeweils eine Kurbel (34, 61, 76, 82) aufweist, die am Rahmen (21) drehbeweglich in einer Linearführung (45, 77, 78, 83, 84) zum Ausgleich eines Drehversatzes gelagert ist, wobei die Welle (35, 75) über mindestens ein Getriebe (60, 79, 80), dass als Reibrad- oder Zahnradgetriebe ausgebildet ist, mit dem Antrieb (54) antreibbar verbunden ist.

2. Hochhalter nach Anspruch 1, **dadurch gekennzeichnet, dass** senkrecht zur Welle (35) mindestens eine horizontal verlaufende Torsionswelle (38, 55) angeordnet ist, die an ihren Enden jeweils eine Kurbel (36, 37, 56, 62) aufweist, die am Rahmen (21) drehbeweglich in einer Linearführung (46, 47) zum Ausgleich eines Drehversatzes gelagert ist.

3. Hochhalter nach Anspruch 2, **dadurch gekennzeichnet, dass** mindestens zwei horizontal verlaufende Torsionswellen (38, 55) senkrecht zur Welle (35) angeordnet sind.

4. Hochhalter nach einem der Ansprüche 2 oder 3, **dadurch gekennzeichnet, dass** die Kurbeln (36, 37, 56, 62) der Torsionswellen (38, 55) eine größere Länge aufweisen als die Kurbeln (34, 61) der Welle (35).

5. Hochhalter nach Anspruch 1, **dadurch gekennzeichnet, dass** er mindestens zwei parallel zueinander laufende Wellen (35, 75) aufweist, die am Gestell (22) drehbeweglich gelagert sind und an ihren Enden jeweils über eine Kurbel (34, 61, 76, 82) mit dem Rahmen (21) verbunden sind, wobei die Wellen (35, 75) senkrecht zu einer Antriebswelle (81) des Antriebs (54) angeordnet sind und jeweils über ein als Kegelradgetriebe (79, 80) ausgebildetes Getriebe mit der gemeinsamen Antriebswelle (81) verbunden sind.

6. Hochhalter nach Anspruch 5, **dadurch gekennzeichnet, dass** die Wellen (35, 75) jeweils durch eine durchgehende Abtriebsbohrung der Kegelradgetriebe (79, 80) geführt sind.

7. Hochhalter nach einem der vorhergehenden Ansprüche, **dadurch gekennzeichnet, dass** der Rahmen (21) am Gestell (22) über mindestens eine vertikale Linearführung (23) geführt ist.

8. Hochhalter nach einem der vorhergehenden Ansprüche, **dadurch gekennzeichnet, dass** die Hochhalterelemente (15) eine Vakuumansaugung aufweisen, wobei insbesondere die Hochhalterelemente (15) einzeln ansteuerbar sind.

9. Hochhalter nach einem der vorhergehenden Ansprüche, **dadurch gekennzeichnet, dass** die Transportbänder (9) eine Vakuumansaugung aufweisen.

10. Hochhalter nach einem der vorhergehenden Ansprüche, **dadurch gekennzeichnet, dass** am Rahmen (21) ein vertikal bewegbarer Gegenhalter (51) angeordnet ist, der sich parallel zu den Hochhalterelementen (15) erstreckt.

11. Hochhalter nach Anspruch 10, **dadurch gekennzeichnet, dass** der Gegenhalter (51) eine Mehrzahl an nebeneinander angeordneten Gegenhalterelementen (52) aufweist, die vertikal relativ zueinander bewegbar sind, wobei die Gegenhalterelemente (52) insbesondere durch jeweils ein Federelement (53) in Richtung einer vertikal oberen Position belastet sind.

12. Hochhalter nach einem der Ansprüche 10 oder 11, **dadurch gekennzeichnet, dass** Oberseiten der Gegenhalterelemente (52) geneigt zueinander ausgebildet sind, wobei der Gegenhalter (51) insbesondere ein Sägezahnprofil aufweist.

13. Hochhalter nach einem der Ansprüche 10 bis 12, **dadurch gekennzeichnet, dass** zumindest einige der Gegenhalterelemente (52), insbesondere die beiden äußeren Gegenhalterelemente (52), auf der Spleißerseite eine Vakuumansaugung aufweisen, wobei insbesondere eine Führung der Federelemente (53) als Vakuumeinspeisung ausgebildet ist.

14. Hochhalter nach einem der vorhergehenden Ansprüche, **dadurch gekennzeichnet, dass** der Hochhalter (1) mit einer Schere (2) kombiniert ist, wobei die Hochhalterelemente (15) und gegebenenfalls der Gegenhalter (51) parallel zu einer Messeröffnung (4) der Schere (2)verlaufen.

15. Hochhalter nach Anspruch 14, **dadurch gekennzeichnet, dass** der Gegenhalter (51) fluchtend unterhalb einer Schneidkante (14) eines Obermessers (12) der Schere (2) angeordnet ist und beim Schneidvorgang durch das Obermesser (12) nach unten drückbar ist.

16. Hochhalter nach einem der vorhergehenden Ansprüche, **dadurch gekennzeichnet, dass** er eine Winkelverstellung aufweist, wobei die Hochhalterelemente (15) und gegebenenfalls der Gegenhalter (51) in deren Längsrichtung linear verschiebbar am Rahmen (21) gelagert sind und bei einer Betätigung der Winkelverstellung winkeltreu in der Längsrichtung relativ zueinander bewegbar sind, wobei eine Breite der Freiräume (17) konstant bleibt.

17. Hochhalter nach Anspruch 16, **dadurch gekennzeichnet, dass** die Hochhalterelemente (15) über eine Mitnehmerplatte miteinander verbunden sind, wobei die Mitnehmerplatte um einen Drehpunkt verschwenkbar am Rahmen (21) gelagert ist.

18. Hochhalter nach einem der vorhergehenden Ansprüche, **dadurch gekennzeichnet, dass** der Hochalter (1) mit einer Spleißeinrichtung (3) kombiniert ist, wobei die Spleißeinrichtung (3) insbesondere als Überlappspleißer ausgebildet ist.

19. Hochhalter nach Anspruch 18, **dadurch gekennzeichnet, dass** die Spleißeinrichtung (3) am Gestell (22) befestigt ist, wobei der Hochhalter (1) mit der Spleißeinrichtung (3) und den Transportbändern (9) eine Einheit bildet.

20. Hochhalter nach Anspruch 18 oder 19, **dadurch gekennzeichnet, dass** ein Spleißwinkel der Spleißeinrichtung (3) einstellbar ist, wobei insbesondere durch eine Verstellung des Spleißwinkels eine Winkelverstellung des Hochhalters (1) bewirkbar ist.

## Claims

1. Retainer for a cord cutting system having a mount (22) and a frame (21) which is moveable between an upper pick-up position and a lower release position vertically relative to the mount (22), wherein several retainer elements (15) are arranged one next to the other on the frame (21), between which clearances (17) for conveyor belts (9) are formed, wherein at least one shaft (35, 75) is mounted to be rotationally moveable on the mount (22), said shaft having a crank (34, 61, 76, 82) on its ends respectively which is mounted on the frame (21) to be rotational moveable in a linear guide (45, 77, 78, 83, 84) for compensation of a rotational offset, wherein the shaft (35, 75) is connected in a driveable manner to the drive (54) via at least one gear (60, 79, 80) that is formed as a friction gear or a gear drive.

2. Retainer according to Claim 1, **characterised in that** at least one torsion shaft (38, 55) running horizontally is arranged perpendicularly to the shaft (35), said torsion shaft having a crank (36, 37, 56, 62) on its ends respectively which is mounted on the frame (21) to be rotationally moveable in a linear guide (46, 47) for compensation of a rotational offset.

3. Retainer according to Claim 2, **characterised in that** at least two torsion shafts (38, 55) running horizontally are arranged perpendicularly to the shaft (35).

4. Retainer according to any one of Claims 2 or 3, **characterised in that** the cranks (36, 37, 56, 62) of the torsion shafts (38, 55) have a greater length than the cranks (34, 61) of the shaft (35).

5. Retainer according to Claim 1, **characterised in that** it has at least two shafts (35, 75) running in parallel to each other which are mounted to be rotationally moveable on the mount (22) and are connected to the frame (21) at their ends via a crank (34, 61, 76, 82) respectively, wherein the shafts (35, 75) are arranged perpendicularly to a drive shaft (81) of the drive (54) and are connected to the mutual drive shaft (81) via a gear formed as a bevel gear (79, 80) respectively.

6. Retainer according to Claim 5, **characterised in that** the shafts (35, 75) are guided by a continuous output bore of the bevel gear (79, 80) respectively.

7. Retainer according to any one of the preceding claims, **characterised in that** the frame (21) is guided on the mount (22) via at least one vertical linear guide (23).

8. Retainer according to any one of the preceding claims, **characterised in that** the retainer elements (15) have a vacuum suction system, wherein in particular the retainer elements (15) are able to be controlled individually.

9. Retainer according to any one of the preceding claims, **characterised in that** the conveyor belts (9) have a vacuum suction system.

10. Retainer according to any one of the preceding claims, **characterised in that** a vertically moveable counterholder (51) is arranged on the frame (21), said counterholder extending in parallel to the retainer elements (15).

11. Retainer according to Claim 10, **characterised in that** the counterholder (51) has a plurality of counterholder elements (52) arranged one next to the other which are moveable vertically relative to one another, wherein the counterholder elements (52) are loaded in the direction of a vertically upper position, in particular by a spring element (53) respectively.

12. Retainer according to any one of Claims 10 or 11, **characterised in that** upper sides of the counterholder elements (52) are formed to be inclined towards one another, wherein the counterholder (51) in particular has a saw tooth profile.

13. Retainer according to any one of Claims 10 to 12, **characterised in that** at least some of the counterholder elements (52), in particular the two outer counterholder elements (52), have a vacuum suction system on the splicer side, wherein in particular a guide of the spring elements (53) is formed as a vacuum feed.

14. Retainer according to any one of the preceding claims, **characterised in that** the retainer (1) is combined with scissors (2), wherein the retainer elements (15) and if necessary the counterholders (51) run in parallel to a blade opening (4) of the scissors (2).

15. Retainer according to Claim 14, **characterised in that** the counterholder (51) is arranged to be aligned underneath a cutting edge (14) of an upper blade (12) of the scissors (2) and is able to be pressed downwards by the upper blade (12) during the cutting procedure.

16. Retainer according to any one of the preceding claims, **characterised in that** it has an angle adjustment system, wherein the retainer elements (15) and if necessary the counterholder (51) are mounted on the frame (21) to be linearly displaceable in their longitudinal direction and are moveable relative to one another in the longitudinal direction to be conformal during an actuation of the angle adjustment system, wherein a width of the clearance (17) remains constant.

17. Retainer according to Claim 16, **characterised in that** the retainer elements (15) are connected to one another via a driver plate, wherein the driver plate is mounted on the frame (21) to be able to swivel around a pivot point.

18. Retainer according to any one of the preceding claims, **characterised in that** the retainer (1) is combined with a splicing device (3), wherein the splicing device (3) is formed in particular as an overlap splicer.

19. Retainer according to Claim 18, **characterised in that** the splicing device (3) is fastened to the mount (22), wherein the retainer (1) forms a unit with the splicing device (3) and the conveyor belts (9).

20. Retainer according to Claim 18 or 19, **characterised in that** a splicing angle of the splicing device (3) is adjustable, wherein in particular an angle adjustment of the retainer (1) is able to be caused by an adjustment of the splicing angle.

## Revendications

1. Support haut pour une installation de coupe de corde comprenant un châssis (22) et un cadre (21), qui peut être déplacé par rapport au châssis (22) de manière verticale entre une position d'enlèvement supérieure et une position de distribution inférieure, dans lequel plusieurs éléments de support haut (15) sont disposés les uns à côté des autres au niveau du cadre (21), entre lesquels des espaces dégagés (17) sont réalisés pour des bandes de transport (9), dans lequel au moins un arbre (35, 75) est monté de manière mobile en rotation au niveau du châssis (22), lequel arbre présente, au niveau de ses extrémités, respectivement un vilebrequin (34, 61, 76, 82), qui est monté de manière mobile en rotation au niveau du cadre (21) dans un guidage linéaire (45, 77, 78, 83, 84) afin de compenser un décalage en rotation, dans lequel l'arbre (35, 75) est relié de manière à pouvoir être entraîné à l'entraînement (54) par l'intermédiaire d'au moins une transmission (60, 79, 80), qui est réalisée sous la forme d'une transmission à roue de friction ou d'une transmission à roue dentée.

2. Support haut selon la revendication 1, **caractérisé en ce qu'**au moins un arbre de torsion (38, 55) s'étendant de manière horizontale est disposé de manière perpendiculaire par rapport à l'arbre (35), lequel présente, au niveau de ses extrémités, respectivement un vilebrequin (36, 37, 56, 62), qui est monté de manière mobile en rotation au niveau du cadre (21) dans un guidage linéaire (46, 47) afin de compenser un décalage en rotation.

3. Support haut selon la revendication 2, **caractérisé en ce qu'**au moins deux arbres de torsion (38, 55) s'étendant de manière horizontale sont disposés de manière perpendiculaire par rapport à l'arbre (35).

4. Support haut selon l'une quelconque des revendications 2 ou 3, **caractérisé en ce que** les vilebrequins (36, 37, 56, 62) des arbres de torsion (38, 55) présentent une longueur plus grande que les vilebrequins (34, 61) de l'arbre (35).

5. Support haut selon la revendication 1, **caractérisé en ce qu'**il présente au moins deux arbres (35, 75) s'étendant de manière parallèle l'un par rapport à l'autre, lesquels sont montés de manière mobile en rotation au niveau du châssis (22) et sont reliés au niveau de leurs extrémités respectivement par l'intermédiaire d'un vilebrequin (34, 61, 76, 82) au cadre (21), dans lequel les arbres (35, 75) sont disposés de manière perpendiculaire par rapport à un arbre d'entraînement (81) de l'entraînement (54) et sont reliés à l'arbre d'entraînement (81) commun respectivement par l'intermédiaire d'une transmission réalisée sous la forme d'une transmission à pignon conique (79, 80).

6. Support haut selon la revendication 5, **caractérisé en ce que** les arbres (35, 75) sont guidés respectivement à travers un alésage de sortie traversant de la transmission à pignon conique (79, 80).

7. Support haut selon l'une quelconque des revendications précédentes, **caractérisé en ce que** le cadre (21) est guidé au niveau du châssis (22) par l'intermédiaire au moins d'un guidage linéaire (23) vertical.

8. Support haut selon l'une quelconque des revendications précédentes, **caractérisé en ce que** les éléments de support haut (15) présentent une aspiration sous vide, dans lequel en particulier les éléments de support haut (15) peuvent être commandés individuellement.

9. Support haut selon l'une quelconque des revendications précédentes, **caractérisé en ce que** les bandes de transport (9) présentent une aspiration sous vide.

10. Support haut selon l'une quelconque des revendications précédentes, **caractérisé en ce qu'**un support complémentaire (51) pouvant être déplacé de manière verticale est disposé au niveau du cadre (21), lequel s'étend de manière parallèle par rapport aux éléments de support haut (15).

11. Support haut selon la revendication 10, **caractérisé en ce que** le support complémentaire (51) présente une pluralité d'éléments de support complémentaire (52) disposés les uns à côté des autres, lesquels peuvent être déplacés les uns par rapport aux autres de manière verticale, dans lequel les éléments de support complémentaire (52) sont contraints, en particulier, par respectivement un élément de ressort (53) en direction d'une position verticalement supérieure.

12. Support haut selon l'une quelconque des revendications 10 ou 11, **caractérisé en ce que** des côtés supérieurs des éléments de support complémentaire (52) sont réalisés de manière inclinée les uns par rapport aux autres, dans lequel le support complémentaire (51) présente en particulier un profil en dent de scie.

13. Support haut selon l'une quelconque des revendications 10 à 12, **caractérisé en ce qu'**au moins quelques-uns des éléments de support complémentaire (52), en particulier les deux éléments de support complémentaire (52) extérieurs, présentent sur le côté d'épissage une aspiration sous vide, dans lequel en particulier un guidage des éléments de ressort (53) est réalisé sous la forme d'une alimentation sous vide.

14. Support haut selon l'une quelconque des revendications précédentes, **caractérisé en ce que** le support haut (1) est combiné à une cisaille (2), dans lequel les éléments de support haut (15) et le cas échéant le support complémentaire (51) s'étendent de manière parallèle par rapport à une ouverture de lame (4) de la cisaille (2).

15. Support haut selon la revendication 14, **caractérisé en ce que** le support complémentaire (51) est disposé en alignement sous une arête coupante (14) d'une lame supérieure (12) de la cisaille (2) et peut être poussé vers le bas lors de l'opération de découpe par la lame supérieure (12).

16. Support haut selon l'une quelconque des revendications précédentes, **caractérisé en ce qu'**il présente un ajustement angulaire, dans lequel les éléments de support haut (15) et le cas échéant le support complémentaire (51) sont montés au niveau du cadre (21) de manière à pouvoir coulisser de manière linéaire dans leur direction longitudinale et peuvent être déplacés l'un par rapport à l'autre dans la direction longitudinale de manière isogonale lors d'un actionnement de l'ajustement angulaire, dans lequel une largeur des espaces dégagés (17) reste constante.

17. Support haut selon la revendication 16, **caractérisé en ce que** les éléments de support haut (15) sont reliés les uns aux autres par l'intermédiaire d'une plaque entraîneuse, dans lequel la plaque entraîneuse est montée au niveau du cadre (21) de manière à pouvoir pivoter autour d'un point de rotation.

18. Support haut selon l'une quelconque des revendications précédentes, **caractérisé en ce que** le support haut (1) est combiné à un dispositif d'épissage (3), dans lequel le dispositif d'épissage (3) est réalisé en particulier sous la forme d'un mécanisme à épisser par chevauchement.

19. Support haut selon la revendication 18, **caractérisé en ce que** le dispositif d'épissage (3) est fixé au niveau du châssis (22), dans lequel le support haut (1) forme une unité avec le dispositif d'épissage (3) et avec les bandes de transport (9).

20. Support haut selon la revendication 18 ou 19, **caractérisé en ce qu'**un angle d'épissage du dispositif d'épissage (3) peut être réglé, dans lequel un ajustement angulaire du support haut (1) peut être provoqué en particulier par un ajustement de l'angle d'épissage.
